(19) **Europäisches Patentamt**
**European Patent Office**
**Office européen des brevets**

(11) **EP 4 375 328 A1**

(12) **EUROPEAN PATENT APPLICATION**

(43) Date of publication:
**29.05.2024  Bulletin 2024/22**

(21) Application number: **22209172.0**

(22) Date of filing: **23.11.2022**

(51) International Patent Classification (IPC):
***C08L 23/12*** *(2006.01)*

(52) Cooperative Patent Classification (CPC):
(C-Sets available)
**C08L 23/12;** C08L 2205/025; C08L 2205/035;
C08L 2207/02; C08L 2314/02           (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Borealis AG**
**1020 Vienna (AT)**

(72) Inventors:
• **LUMMERSTORFER, Thomas**
  **4021 Linz (AT)**

• **KNIESEL, Claudia**
  **4021 Linz (AT)**
• **HORILL, Thomas**
  **2320 Schwechat (AT)**
• **ABBASI, Mahdi**
  **4021 Linz (AT)**
• **GAHLEITNER, Markus**
  **4021 Linz (AT)**
• **COSTA, Francis Reny**
  **4021 Linz (AT)**

(74) Representative: **Maiwald GmbH**
**Elisenhof**
**Elisenstraße 3**
**80335 München (DE)**

(54) **POLYPROPYLENE COMPOSITION FOR AUTOMOTIVE APPLICATIONS**

(57)    The present invention relates to compositions suitable especially for automotive applications comprising two heterophasic propylene copolymers having different melt flow rates, an ethylene-based plastomer and inorganic fillers.

EP 4 375 328 A1

(52) Cooperative Patent Classification (CPC): (Cont.)

    C-Sets
    **C08L 23/12, C08L 23/12, C08L 23/16,**
    **C08L 23/12, C08L 23/12, C08L 23/16,**
    **C08L 23/16, C08L 23/0815, C08K 3/013**

**Description**

The present invention relates to compositions suitable especially for automotive applications comprising two heterophasic propylene copolymers having different melt flow rates, an ethylene-based plastomer and inorganic fillers.

**Technical background**

Compositions suitable for the automotive industry typically contain one or more heterophasic polypropylene copolymer(s), and/or random heterophasic copolymers, and conventionally some inorganic filler.

Presently, there are two trends in the automotive industry:

- Weight reduction demanding thin-wall constructions and the need to keep mineral reinforcements at a low level.
- Use of post-industrial and even post-consumer recyclate material of lower MFR and limited impact strength, requiring a boost by other components in the final composition.

For meeting these requirements, the compositions suitable for automotive applications need to have a high flowability, indicated by a high melt flow rate, and high toughness, indicated by a high impact strength, and a high dimensional stability after processing, indicated by a low shrinkage and a low initial coefficient of linear thermal expansion (CLTE).

The properties of the compositions can be adjusted by introducing polymeric components, which adapt the properties of the elastomeric phase of the one or more heterophasic polypropylene copolymer(s) such as elastomeric polymers like plastomers and/or by introducing polymeric components which adapt the properties of the matrix phase of the one or more heterophasic polypropylene copolymer(s) such as propylene homo- or random copolymers.

However, a more distinct effect can be obtained by adapting the properties of the one or more heterophasic polypropylene copolymer(s) as main component of the composition.

WO 2005/014715 A1 discloses heterophasic propylene copolymers suitable for automotive compositions. However, these heterophasic propylene copolymers show a rather low melt flow rate $MFR_2$ of 5 to 20 g/10 min and a limited impact strength at low temperature and are consequently not adequate base resins for automotive compositions meeting the future requirements of the automotive industry.

Likewise, WO 2017/148970 A1 discloses copolymers suitable for automotive compositions. However, these heterophasic propylene copolymers show a rather low melt flow rate $MFR_2$ of 15 to 70 g/10 min and a low flexural modulus and are consequently not adequate base resins for automotive compositions meeting the future requirements of the automotive industry.

Therefore, there is a need in the art for new heterophasic propylene copolymers which are suitable as major component in compositions suitable for automotive compositions. It has been found that by carefully adapting the properties of the heterophasic propylene copolymer used as main component, especially the properties of the elastomer phase and by adapting the amount of said heterophasic propylene copolymer in the composition, compositions showing a superior balance of properties in regard of high flowability, indicated in a high melt flow rate, and high toughness after processing, indicated in a low initial coefficient of linear thermal expansion (CLTE), and a high dimensional stability after processing, indicated in a low shrinkage, can be obtained. These compositions also show good mechanical properties, impact properties and surface properties, such as good paint adhesion, so that they qualify for unpainted and painted automotive applications such as bumpers.

When carefully adapting the amount of said heterophasic propylene copolymer in the composition a further improved impact, toughness and shrinkage behaviour is observed, which can be seen in an improved correlation of shrinkage and puncture energy, increased impact strength and reduced initial coefficient of linear thermal expansion (CLTE), whereas the mechanical properties are maintained at acceptable levels.

**Summary of the invention**

The present invention relates to a composition suitable for automotive applications obtainable by blending at least components (A), (B), (C) and (D)

(A) more than 50 to 75 wt.-%, preferably 51 to 73 wt.-%, more preferably 54 to 70 wt.-% of a first heterophasic propylene copolymer;
(B) 5 to 15 wt.-%, preferably 7 to 13 wt.-%, more preferably 8 to 12 wt.-% of a second heterophasic propylene copolymer;
(C) 10 to 20 wt.-%, preferably 12 to 19 wt.-%, more preferably 14 to 18 wt.-% of an ethylene-based plastomer and
(D) 5 to 20 wt.-%, preferably 7 to 18 wt.-%, more preferably 8 to 17 wt.-% of an inorganic filler;

whereby all percentages refer to the total composition, and whereby

the first heterophasic propylene copolymer (A) comprises a matrix phase and an elastomer phase dispersed therein and has

- a melt flow rate MFR$_2$ (230°C, 2.16 kg, ISO 1133) of 40 to 150 g/10min, preferably 45 to 140 g/10min, more preferably 50 to 130 g/10min;
- a soluble fraction (SF) content determined according to CRYSTEX QC analysis in the range from 15.0 to 27.5 wt.-%, preferably from 16.5 to 25.0 wt.-%, more preferably from 17.5 to 24.0 wt.-%;
- an ethylene content of said soluble fraction C2(SF), as determined by FT-IR spectroscopy calibrated by quantitative $^{13}$C-NMR spectroscopy, in the range from 37.0 to 65.0 wt.-%, preferably from 39.0 to 60.0 wt.-%, more preferably from 40.0 to 58.0 wt.-%; and
- an intrinsic viscosity of said soluble fraction IV(SF), as measured in decalin according to DIN ISO 1628/1 at 135°C, of 1.2 to 4.5 dl/g, preferably of 1.4 to 4.0 dl/g, more preferably of 1.5 to 3.9 dl/g;

the second heterophasic propylene copolymer (B) comprises a matrix phase and an elastomer phase dispersed therein and has

- a melt flow rate MFR$_2$ (230°C, 2.16 kg, ISO 1133) of 3.0 to 30 g/10min, preferably 4.0 to 25 g/10min, more preferably 5.0 to 20 g/10min;
- a soluble fraction (SF) content determined according to CRYSTEX QC analysis in the range of from 18.0 to 45.0 wt.-%, preferably from 20.0 to 40.0 wt.-%; and
- an intrinsic viscosity of said soluble fraction IV(SF), as measured in decalin according to DIN ISO 1628/1 at 135°C, of 2.5 to 8.5 dl/g, preferably of 3.0 to 8.0 dl/g, more preferably of 3.5 to 7.5 dl/g;

the ethylene-based plastomer (C) being a copolymer of ethylene with comonomer units selected from alpha-olefins having from 3 to 12 carbon atoms, preferably from alpha-olefins having from 4 to 10 carbon atoms, most preferably from 1-butene or 1-octene, has

- a melt flow rate MFR$_2$ (190°C, 2.16 kg, ISO 1133) of 0.5 to 25.0 g/10min, preferably 0.8 to 20.0 g/10min; and
- a density of 850 to 900 kg/m$^3$, preferably from 860 to 895 kg/m$^3$, more preferably from 865 to 895 kg/m$^3$, still more preferably from 870 to 890 kg/m$^3$; and

the composition has

- a melt flow rate MFR$_2$ (230°C, 2.16 kg, ISO 1133) of 12 to 50 g/10min, preferably 13 to 45 g/10min, more preferably 14 to 40 g/10min.

Further, the present invention relates to an article, preferably an injection moulded article, more preferably an injection moulded automotive article comprising the composition as described above or below.

Still further, the present invention relates to the use of the composition as described above or below for injection moulding of articles, preferably automotive articles.

**Definitions**

Unless defined otherwise, all technical and scientific terms used herein have the same meaning as commonly understood by one of ordinary skill in the art to which the invention pertains. Although, any methods and materials similar or equivalent to those described herein can be used in practice for testing of the present invention, the preferred materials and methods are described herein. In describing and claiming the present invention, the following terminology will be used in accordance with the definitions set out below. Unless clearly indicated otherwise, use of the terms "a," "an," and the like refers to one or more.

A polymer blend is a mixture of two or more polymeric components. In general, the blend can be prepared by mixing the two or more polymeric components. A suitable mixing procedures known in the art is post-polymerization blending. Post-polymerization blending can be dry blending of polymeric components such as polymer powders and/or compounded polymer pellets or melt blending by melt mixing the polymeric components.

A propylene homopolymer is a polymer, which essentially consists of propylene monomer units. Due to impurities especially during commercial polymerization processes, a propylene homopolymer can comprise up to 0.20 mol-% comonomer units, preferably up to 0.10 mol-% comonomer units and most preferably up to 0.05 mol-% comonomer units.

A polypropylene means a polymer being composed of units derived from propylene in an amount of more than 50 mol-%.

A polyethylene means a polymer being composed of units derived from ethylene in an amount of more than 50 mol-%.

The term "elastomer" denotes a natural or synthetic polymer having elastic properties. The term "plastomer" denotes a natural or synthetic polymer which combines qualities of elastomers and plastics, such as rubber-like properties with the processing ability of plastic. An ethylene based plastomer means a plastomer being composed of units derived from ethylene in an amount of more than 50 mol-%.

The presence of a heterophasic nature can be easily determined by the number of glass transition points, like in dynamic-mechanical analysis (DMA), and/or high resolution microscopy, like scanning electron microscopy (SEM), transmission electron microscopy (TEM) or atomic force microscopy (AFM).

The term "XCS" refers to the xylene cold soluble fraction (XCS wt.-%) determined at 25 °C according to ISO 16152. The term "XCI" refers to the xylene cold insoluble fraction (XCI wt.-%) determined at 25 °C according to ISO 16152.

Reactor blend is a blend originating from the production in two or more reactors coupled in series or in a reactor having two or more reaction compartments. A reactor blend may alternatively result from blending in solution. A reactor blend stands in contrast to a compound as produced by melt extrusion.

The term "recycled" polymer is used to indicate that the material is recovered from post-consumer waste and/or industrial waste. Namely, post-consumer waste refers to objects having completed at least a first use cycle (or life cycle), i.e. having already served their first purpose; while industrial waste refers to the manufacturing scrap which does normally not reach a consumer.

Respectively, the term "virgin" denotes the newly produced materials and/or objects prior to first use and not being recycled. In case that the origin of the polymer is not explicitly mentioned the polymer is a "virgin" polymer.

If not indicated otherwise "%" refers to weight-% (wt.-%).

## Detailed description

### Composition

In a first aspect, the present invention relates to a composition suitable for automotive applications obtainable by blending at least components (A), (B), (C) and (D)

(A) more than 50 to 75 wt.-%, preferably 51 to 73 wt.-%, more preferably 54 to 70 wt.-% of a first heterophasic propylene copolymer;

(B) 5 to 15 wt.-%, preferably 7 to 13 wt.-%, more preferably 8 to 12 wt.-% of a second heterophasic propylene copolymer;

(C) 10 to 20 wt.-%, preferably 12 to 19 wt.-%, more preferably 14 to 18 wt.-% of an ethylene-based plastomer and

(D) 5 to 20 wt.-%, preferably 7 to 18 wt.-%, more preferably 8 to 17 wt.-% of an inorganic filler;

whereby all percentages refer to the total composition, and whereby

the first heterophasic propylene copolymer (A) comprises a matrix phase and an elastomer phase dispersed therein and has

- a melt flow rate $MFR_2$ (230°C, 2.16 kg, ISO 1133) of 40 to 150 g/10min, preferably 45 to 140 g/10min, more preferably 50 to 130 g/10min;
- a soluble fraction (SF) content determined according to CRYSTEX QC analysis in the range from 15.0 to 27.5 wt.-%, preferably from 16.5 to 25.0 wt.-%, more preferably from 17.5 to 24.0 wt.-%;
- an ethylene content of said soluble fraction C2(SF), as determined by FT-IR spectroscopy calibrated by quantitative $^{13}$C-NMR spectroscopy, in the range from 37.0 to 65.0 wt.-%, preferably from 39.0 to 60.0 wt.-%, more preferably from 40.0 to 58.0 wt.-%; and
- an intrinsic viscosity of said soluble fraction IV(SF), as measured in decalin according to DIN ISO 1628/1 at 135°C, of 1.2 to 4.5 dl/g, preferably of 1.4 to 4.0 dl/g, more preferably of 1.5 to 3.9 dl/g;

the second heterophasic propylene copolymer (B) comprises a matrix phase and an elastomer phase dispersed therein and has

- a melt flow rate $MFR_2$ (230°C, 2.16 kg, ISO 1133) of 3.0 to 30 g/10min, preferably 4.0 to 25 g/10min, more preferably 5.0 to 20 g/10min;

- a soluble fraction (SF) content determined according to CRYSTEX QC analysis in the range of from 18.0 to 45.0 wt.-%, preferably from 20.0 to 40.0 wt.-%; and
- an intrinsic viscosity of said soluble fraction C2(SF), as measured in decalin according to DIN ISO 1628/1 at 135°C, of 2.5 to 8.5 dl/g, preferably of 3.0 to 8.0 dl/g, more preferably of 3.5 to 7.5 dl/g;

the ethylene-based plastomer (C) being a copolymer of ethylene with comonomer units selected from alpha-olefins having from 3 to 12 carbon atoms, preferably from alpha-olefins having from 4 to 10 carbon atoms, most preferably from 1-butene or 1-octene, has

- a melt flow rate $MFR_2$ (190°C, 2.16 kg, ISO 1133) of 0.5 to 25.0 g/10min, preferably 0.8 to 20.0 g/10min; and
- a density of 850 to 900 $kg/m^3$, preferably from 860 to 895 $kg/m^3$, more preferably from 865 to 895 $kg/m^3$, still more preferably from 870 to 890 $kg/m^3$; and

the composition has

- a melt flow rate $MFR_2$ (230°C, 2.16 kg, ISO 1133) of 12 to 50 g/10min, preferably 13 to 45 g/10min, more preferably 14 to 40 g/10min.

The composition suitable for automotive application according to the present invention is particularly suitable for injection moulding of articles to be used on the exterior of vehicles.

The composition suitable for automotive application according to the present invention has one or more of the following characteristics:

The composition has a melt flow rate $MFR_2$ (230°C, 2.16 kg, ISO 1133) of 12 to 50 g/10min, preferably 13 to 45 g/10min, more preferably 14 to 40 g/10min.

The composition can be further characterized in its entirety by CRYSTEX QC analysis. In the CRYSTEX QC analysis a crystalline fraction (CF) and a soluble fraction (SF) are obtained which can be quantified and analyzed in regard of the monomer and comonomer content as well as the intrinsic viscosity (IV).

The composition preferably shows one or all of the following properties in the CRYSTEX QC analysis:

- a crystalline fraction (CF) content determined according to CRYSTEX QC analysis in the range from 50.0 to 75.0 wt.-%, more preferably 55.0 to 73.0 wt.-%, still more preferably 60.0 to 72.0 wt.-%, and
- a soluble fraction (SF) content determined according to CRYSTEX QC analysis in the range from 25.0 to 50.0 wt.-%, more preferably 27.0 to 45.0 wt.-%, still more preferably 28.0 to 40.0 wt.-%.

Generally, the crystalline fraction (CF) content and the soluble (SF) content of a composition only relate to its polymeric components, i.e. without other components, which are insoluble and therefore not part of the dissolution and crystallization cycles as described below in the determination method, such as the inorganic filler (D).

The crystalline fraction (CF) content and the soluble (SF) content therefore are based on the weight amount of the polymeric components of the composition.

Said crystalline fraction (CF) preferably has one or more, preferably all of the following properties:

- an ethylene content (C2(CF)), as determined by FT-IR spectroscopy calibrated by quantitative $^{13}$C-NMR spectroscopy, of from 8.0 to 20.0 wt.-%, more preferably 8.5 to 19.0 wt.-%, still more preferably 9.0 to 18.0 wt.-%; and/or
- an intrinsic viscosity (IV(CF)), as measured in decalin according to DIN ISO 1628/1 at 135°C, of from 0.9 to 2.5 dl/g, more preferably from 1.0 to 2.3 dl/g, still more preferably from 1.1 to 2.2 dl/g.

Said soluble fraction (SF) preferably has one or more, preferably all of the following properties:

- an ethylene content (C2(SF)), as determined by FT-IR spectroscopy calibrated by quantitative $^{13}$C-NMR spectroscopy, in the range from 60.0 to 75.0 wt.-%, more preferably 62.0 to 72.5 wt.-%, still more preferably 64.0 to 70.0 wt.-%; and/or
- an intrinsic viscosity (IV(SF)), as measured in decalin according to DIN ISO 1628/1 at 135°C, of from 1.7 to 3.5 dl/g, more preferably from 1.8 to 3.3 dl/g, still more preferably 1.9 to 3.2 dl/g.

The composition preferably comprises units derived from ethylene in an amount of from 20.0 to 40.0 wt.-%, more preferably from 22.5 to 37.5 wt.-%, still more preferably from 25.0 to 35.0 wt.-%, as determined by FT-IR spectroscopy calibrated by quantitative $^{13}$C-NMR spectroscopy.

Additionally, the composition preferably has an intrinsic viscosity IV of from 1.40 to 2.50 dl/g, more preferably from 1.45 to 2.30 dl/g, still more preferably from 1.50 to 2.10 dl/g.

Further, the composition preferably has a ratio of the intrinsic viscosities of the soluble fraction and crystalline fraction (IV(SF)/IV(CF)) of more than 1.0, more preferably of 1.1 to 2.5, still more preferably of 1.2 to 2.2.

Still further, the composition preferably has a ratio of the ethylene contents of the soluble fraction and crystalline fraction (C2(SF)/C2(CF)) of 2.5 to 7.5, more preferably in the range of from 3.0 to 7.0, still more preferably in the range of from 3.5 to 6.5.

The composition according to the invention preferably shows a superior balance of properties in regard of flowability, as can be seen from the melt flow rate described above, mechanical properties and especially impact properties, such as in regard of the Charpy notched impact strength.

The composition preferably has a tensile modulus of from 1500 MPa to 2500 MPa, more preferably from 1600 MPa to 2200 MPa.

Still further, the composition preferably has a tensile elongation at break of more than 10.0%, more preferably from 13.0 to 200.0%.

Further, the composition preferably has a Charpy Notched Impact Strength at 23 °C (CNIS at 23 °C) of from 10.0 to 75.0 kJ/m$^2$, more preferably from 11.5 to 65.0 kJ/m$^2$.

Still further, the composition preferably has a Charpy Notched Impact Strength at -20 °C (CNIS at -20 °C) of from 4.0 to 15.0 kJ/m$^2$, more preferably from 5.0 to 13.0 kJ/m$^2$. Furthermore, the composition preferably has a Charpy Notched Impact Strength at -30 °C (CNIS at -30 °C) of from 2.5 to 10.0 kJ/m$^2$, more preferably from 3.0 to 7.5 kJ/m$^2$.

Still more preferably, the composition has especially good impact strength in the instrumented puncture test, especially at low temperatures:

The composition preferably has a puncture energy, measured at 23°C, of from 28.0 to 65.0 J, more preferably from 30.0 to 60.0 J.

The composition preferably has an energy at maximum force, measured at 23°C, of from 15.0 to 45.0 J, more preferably from 17.5 to 35.0 J.

Further, the composition preferably has a puncture energy, measured at -20°C, of from 10.0 to 55.0 J, more preferably from 12.0 to 50.0 J.

The composition preferably has an energy at maximum force, measured at -20°C, of from 15.0 to 40.0 J, more preferably from 17.5 to 35.0 J.

Still further, the composition preferably has a puncture energy, measured at -30°C, of from 10.0 to 55.0 J, more preferably from 12.0 to 50.0 J.

The composition preferably has an energy at maximum force, measured at -30°C, of from 15.0 to 40.0 J, preferably from 16.5 to 35.0 J.

The composition of the invention mandatorily comprises components (A), (B), (C) and (D) as described above or below in the accordantly described amounts.

The composition can optionally comprise additional polymeric components so that the composition may be obtainable by blending components (A), (B), (C) and (D) and component (E):

(E) 0 to less than 5 wt.-%, preferably 0 to 4 wt.-%, more preferably 0 to 3 wt.-% of a propylene homopolymer;

whereby all percentages refer to the total composition, and whereby

the propylene homopolymer (E) has

- a melt flow rate MFR$_2$ (230°C, 2.16 kg, ISO 1133) of not more than 100 g/10min, preferably 1 to 95 g/10 min, more preferably 5 to 80 g/10 min.

The composition preferably further comprises additives in an amount of up to 3.0 wt%, more preferably in an amount of from 0.1 to 3.0 wt%, still more preferably in an amount of from 0.5 to 2.5 wt%, based on the total weight of the composition.

Typically additives would be selected from antioxidants, anti-slip agents, nucleating agents, anti-scratch agents, anti-scorch agents, metal deactivators, UV-stabilisers, acid scavengers, lubricants, anti-static agents, pigments and the like, as well as combinations thereof. These additives are well known in the polymer industry and their use will be familiar to the skilled practitioner. Any additives, which are present, may be added as an isolated raw material or in a mixture with a carrier polymer, i.e. in a so-called master batch.

It is preferred that the composition does not contain the propylene homopolymer (E), so that the composition consists of components (A), (B), (C) and (D) as described above or below in the accordantly described amounts and optional additives described below.

In a less preferred embodiment the composition contains the propylene homopolymer (E), so that the composition consists of components (A), (B), (C), (D) and (E) in the accordantly described amounts and optional additives described above or below.

It is preferred that all polymeric components of the composition are virgin polymers.

First heterophasic propylene copolymer (A)

The first heterophasic propylene copolymer (A) comprises a matrix phase and an elastomer phase dispersed therein.

The first heterophasic propylene copolymer (A) is characterized by

- a melt flow rate $MFR_2$ (230°C, 2.16 kg, ISO 1133) of 40 to 150 g/10min, preferably 45 to 140 g/10min, more preferably 50 to 130 g/10min;
- a soluble fraction (SF) content determined according to CRYSTEX QC analysis in the range from 15.0 to 27.5 wt.-%, preferably from 16.5 to 25.0 wt.-%, more preferably from 17.5 to 24.0 wt.-%;
- an ethylene content in said soluble fraction C2(SF), as determined by FT-IR spectroscopy calibrated by quantitative $^{13}$C-NMR spectroscopy, of 37.0 to 65.0 wt.-%, preferably from 39.0 to 60.0 wt.-%, more preferably from 40.0 to 58.0 wt.-%; and
- an intrinsic viscosity of said soluble fraction IV(SF), measured in decalin according to DIN ISO 1628/1 at 135°C, of 1.2 to 4.5 dl/g, preferably of 1.4 to 4.0 dl/g, more preferably of 1.5 to 3.9 dl/g.

Preferably the first heterophasic propylene copolymer (A) has one or more, preferably all, of the following properties:

- a crystalline fraction (CF) content determined according to CRYSTEX QC analysis in the range from 72.5 to 85.0 wt.-%, more preferably 75.0 to 83.5 wt.-%, still more preferably 76.0 to 82.5 wt.-%; and/or
- an ethylene content in said crystalline fraction C2(CF), as determined by FT-IR spectroscopy calibrated by quantitative $^{13}$C-NMR spectroscopy, of 4.5 to 17.5 wt.-%, more preferably of 4.7 to 17.0 wt.-%, still more preferably of 5.0 to 16.0 wt.-%; and/or
- an intrinsic viscosity of said crystalline fraction IV(CF), determined according to CRYSTEX QC analysis and measured in decalin according to DIN ISO 1628/1 at 135°C of 0.7 to 1.7 dl/g, more preferably of 0.8 to 1.6 dl/g, still more preferably of 0.9 to 1.5 dl/g; and/or
- a total content of units derived from ethylene (C2), as determined by FT-IR spectroscopy calibrated by quantitative $^{13}$C-NMR spectroscopy, of 12.0 to 32.5 wt.-%, more preferably of 12.5 to 30.0 wt.-%, more preferably of 13.0 to 27.5 wt.-%.

The ratio of the intrinsic viscosities of the soluble fraction and crystalline fraction (IV(SF)/IV(CF)) is preferably more than 1.0, more preferably of 1.3 to 3.0, still more preferably of 1.4 to 2.8.

The ratio of the ethylene contents of the soluble fraction and crystalline fraction (C2(SF)/C2(CF)) is preferably in the range of from 2.5 to 12.0, more preferably in the range of from 3.0 to 10.0, still more preferably in the range of from 3.5 to 8.5.

The first heterophasic propylene copolymer (A) further preferably has one or more, preferably all, of the following properties:

- a melting temperature Tm of from 155 to 175°C, more preferably from 157 to 172°C, still more preferably from 160 to 170°C; and/or
- a first crystallization temperature Tc1 of from 120 to 140°C, more preferably from 122 to 137°C, still more preferably from 125 to 135°C; and/or
- a second crystallization temperature Tc2 of from 95 to 115°C, more preferably from 97 to 112°C, still more preferably from 100 to 110°C,

all of said temperatures being determined by differential scanning calorimetry (DSC).

The first heterophasic propylene copolymer (A) preferably shows a good balance of properties in regard of mechanical properties, impact properties and heat stability:

The first heterophasic propylene copolymer (A) preferably has a tensile modulus of from 1100 to 1500 MPa, more preferably from 1150 to 1450 MPa, still more preferably from 1200 to 1400 MPa.

Further the first heterophasic propylene copolymer (A) preferably has

- a Charpy Notched Impact Strength at 23°C (CNIS at 23°C) of from 0.7 to 4.0 kJ/m$^2$, more preferably from 0.9 to 2.5 kJ/m$^2$, and/or

- a Charpy Notched Impact Strength at -20°C (CNIS at -20°C) of from 0.5 to 4.0 kJ/m$^2$, more preferably from 0.7 to 2.5 kJ/m$^2$.

Additionally, the first heterophasic propylene copolymer (A) preferably has

- a puncture energy in the instrumented puncture test at 23°C (IPT 23°C) of from 0.1 to 2.5 J, more preferably from 0.2 to 1.5 J; and/or
- a puncture energy in the instrumented puncture test at -20°C (IPT -20°C) of from 0.05 to 3.0 J, more preferably from 0.1 to 2.0 J.

Further the first heterophasic propylene copolymer (A) preferably has

- a coefficient of linear thermal expansion at a temperature range from 23 to +80°C at a heating rate of 1 °C/min in machine direction (CLTE 23-80°C, MD) of from 130 to 170 μm/m°C, more preferably from 135 to 160 μm/m°C; and/or
- a coefficient of linear thermal expansion at a temperature range from 23 to +80°C at a heating rate of 1 °C/min in transverse direction (CLTE 23-80°C, TD) of from 135 to 180 μm/m°C, more preferably from 140 to 170 μm/m°C; and/or
- a coefficient of linear thermal expansion at a temperature range from -30 to +80°C at a heating rate of 1 °C/min in machine direction (CLTE -30-80°C, MD) of from 105 to 140 μm/m°C, more preferably from 110 to 130 μm/m°C; and/or
- a coefficient of linear thermal expansion at a temperature range from -30 to +80°C at a heating rate of 1 °C/min in transverse direction (CLTE -30-80°C, TD) of from 115 to 155 μm/m°C, more preferably from 120 to 145 μm/m°C.

Still further, the first heterophasic propylene copolymer (A) preferably has a heat deflection temperature HDT B of from 80 to 105°C, preferably from 83 to 100°C.

It is preferred that the first heterophasic propylene copolymer (A) consists of propylene units and ethylene units only.

Although not measured, the content of units derived from propylene (C3) in the soluble fraction (SF) preferably adds up to 100 wt.-% with the content of units derived from ethylene (C2) in the soluble fraction (SF).

The content of units derived from propylene (C3) in the soluble fraction (SF) is preferably 35.0 to 63.0 wt.-%, more preferably 40.0 to 61.0 wt.-%, still more preferably 42.0 to 60.0 wt.-%.

Although not measured the content of units derived from propylene (C3) in the crystalline fraction (CF) preferably adds up to 100 wt.-% with the content of units derived from ethylene (C2) in the crystalline fraction (CF).

The content of units derived from propylene (C3) in the crystalline fraction (CF) is preferably 82.5 to 95.5 wt.-%, more preferably 83.0 to 95.3 wt.-%, still more preferably 84.0 to 95.0 wt.-%.

The total content of units derived from propylene (C3) in the first heterophasic polypropylene copolymer (A) is preferably 67.5 to 88.0 wt.-%, more preferably 70.0 to 87.5 wt.-%, still more preferably 72.5 to 87.0 wt.-%.

The first heterophasic propylene copolymer (A) preferably is a virgin polymer.

The first heterophasic propylene copolymer (A) can be produced in a multistage process comprising at least two reactors connected in series, wherein a propylene homopolymer is produced in at least one first polymerization step and in at least one subsequent polymerization step a propylene ethylene copolymer is produced in the presence of said propylene homopolymer, or by mixing the propylene homopolymer with the propylene ethylene copolymer after their polymerization.

However, more desirably, the first heterophasic propylene copolymer (A) is produced in a multistage process.

In a particular preferred embodiment, the propylene homopolymer matrix is produced at least in a slurry phase reactor and subsequently the propylene copolymer is produced at least in a gas phase reactor.

Accordingly the first heterophasic propylene copolymer (A) can be typically produced in a cascade of at least 2 reactors, preferably at least 3 reactors, where the first reactor is a liquid bulk reactor preferably of loop design and all subsequent reactors are gas phase reactors, preferably of fluidized bed design. The number of subsequent reactors is typically not more than 6, preferably not more than 5, more preferably not more than 4. Preferably, the first heterophasic propylene copolymer (A) is produced in a cascade of 3 reactors.

A preferred multistage process is a "loop-gas phase"-process, as developed by Borealis (known as BORSTAR® technology) and is described e.g. in patent literature, such as in EP 0 887 379, WO 92/12182 WO 2004/000899, WO 2004/111095, WO 99/24478, WO 99/24479 or in WO 00/68315.

A further suitable slurry-gas phase process is the Spheripol® process of Basell.

Preferably, the components produced in the first two reactors are crystallizable propylene homopolymers, while the component produced in subsequent third reactor is a predominantly amorphous copolymer with higher amounts of comonomer.

It is preferred that the heterophasic propylene copolymer (A) is polymerized in a process comprising the steps of

a) Polymerizing propylene in the presence of a specific Ziegler-Natta catalyst system as described below in a first polymerization reactor for producing a first propylene homopolymer fraction;

b) Transferring a polymerization mixture comprising the Ziegler-Natta catalyst system and the first propylene homopolymer fraction from the first polymerization reactor to a second polymerization reactor;

c) Polymerizing propylene in the presence of the Ziegler-Natta catalyst system in the second polymerization reactor for producing a second propylene homopolymer fraction;

d) Transferring a polymerization mixture comprising the Ziegler-Natta catalyst system and the first and second propylene homopolymer fractions from the second polymerization reactor to a third polymerization reactor;

e) Polymerizing propylene and ethylene in the presence of the Ziegler-Natta catalyst system in the third polymerization reactor for producing a first propylene-ethylene copolymer fraction;

f) Withdrawing a polymerization mixture comprising the Ziegler-Natta catalyst system, the first and second propylene homopolymer fractions and the first propylene-ethylene copolymer fraction from the third polymerization reactor; and

g) Obtaining a polymer powder comprising the first and second propylene homopolymer fractions and the first propylene-ethylene copolymer fraction.

The first polymerization reactor preferably is a slurry phase reactor, such as a loop reactor.

It is preferred that the operating temperature in the first polymerization reactor, preferably the loop reactor, is in the range from 62 to 85 °C, more preferably in the range from 65 to 82 °C, still more preferably in the range from 67 to 80 °C.

Typically, the pressure in the first polymerization reactor, preferably in the loop reactor, is in the range from 20 to 80 bar, preferably 30 to 70 bar, like 35 to 65 bar.

It is preferred that in the first polymerization reactor, preferably the loop reactor, a propylene homopolymer is produced. Thus, it is preferred that the first propylene polymer fraction is a first propylene homopolymer fraction.

Preferably hydrogen is added in the first polymerization reactor in order to control the molecular weight, i.e. the melt flow rate $MFR_2$.

Preferably, the hydrogen to propylene ratio (H2/C3 ratio) in the first polymerization reactor, preferably the loop reactor, is in the range from 20 to 50 mol/kmol, more preferably 30 to 40 mol/kmol.

Due to the high amount of hydrogen, the melt flow rate of the first propylene polymer fraction is very high.

It is preferred that the first propylene polymer fraction has a melt flow rate $MFR_2$ (230°C, 2.16 kg, ISO 1133) in the range of 100 to 1000 g/10 min, preferably in the range of 150 to 850 g/10 min, more preferably in the range of 300 to 700 g/10 min.

The second polymerization reactor preferably is a first gas phase reactor, such as a first fluidized bed gas phase reactor.

It is preferred that the operating temperature in the second polymerization reactor, preferably the first gas phase reactor, is in the range from 75 to 95 °C, more preferably in the range from 78 to 92 °C.

Typically, the pressure in the second polymerization reactor, preferably in the first gas phase reactor, is in the range from 5 to 50 bar, preferably 15 to 40 bar.

It is preferred that in the second polymerization reactor, preferably the first gas phase reactor, a propylene homopolymer is produced. Thus, it is preferred that the second propylene polymer fraction is a second propylene homopolymer fraction.

Preferably hydrogen is added in the second polymerization reactor in order to control the molecular weight, i.e. the melt flow rate $MFR_2$.

Preferably, the hydrogen to propylene ratio (H2/C3 ratio) in the second polymerization reactor, preferably the first gas phase reactor, is in the range from 150 to 500 mol/kmol, more preferably 200 to 350 mol/kmol.

Due to the high amount of hydrogen, the melt flow rate of the combined first and second propylene polymer fractions is very high.

It is preferred that the combined first and second propylene polymer fractions have a melt flow rate $MFR_2$ (230°C, 2.16 kg, ISO 1133) in the range of 100 to 1000 g/10 min, preferably in the range of 150 to 850 g/10 min, more preferably in the range of 300 to 700 g/10 min.

The third polymerization reactor preferably is a second gas phase reactor, such as a second fluidized bed gas phase reactor.

It is preferred that the operating temperature in the third polymerization reactor, preferably the second gas phase reactor, is in the range from 65 to 85 °C, more preferably in the range from 68 to 82 °C. Typically, the operating temperature in third polymerization reactor is lower than the operating temperature in the second polymerization reactor.

Typically, the pressure in the third polymerization reactor, preferably in the second gas phase reactor, is in the range from 5 to 40 bar, preferably 10 to 30 bar.

In the third polymerization reactor, preferably the second gas phase reactor, a propylene ethylene copolymer is produced. Thus, the third propylene polymer fraction is a first propylene ethylene copolymer fraction.

The ethylene to propylene ratio (C2/C3 ratio) in the third polymerization polymerization reactor, preferably the second gas phase reactor, is in the range from 500 to 2500 mol/kmol, more preferably 750 to 2250 mol/kmol.

Due to the high ethylene to propylene ratio (C2/C3 ratio) the third propylene polymer fraction preferably is an elastomeric block copolymer with propylene rich sections and ethylene rich sections.

Preferably hydrogen is added in the third polymerization reactor in order to control the molecular weight, i.e. the melt flow rate $MFR_2$.

Preferably, the hydrogen to ethylene ratio (H2/C2 ratio) in the third polymerization reactor, preferably the second gas phase reactor, is in the range from 50 to 500 mol/kmol, more preferably 65 to 350 mol/kmol.

It is preferred that the combined first, second and third propylene polymer fractions have a melt flow rate $MFR_2$ (230°C, 2.16 kg, ISO 1133) in the range of 40 to 150 g/10min, more preferably 45 to 140 g/10min, still more preferably 50 to 125 g/10min.

Furthermore, the combined first, second and third propylene polymer fractions preferably have a total comonomer content, preferably ethylene (C2) content in the range of 8.5 to 32.5 wt.-%, preferably of 9.0 to 30.0 wt.-%, more preferably of 9.5 to 27.5 wt.-%, based on the total weight of the combined first, second and third propylene polymer fractions, as determined by FT-IR spectroscopy calibrated by quantitative $^{13}$C-NMR spectroscopy.

The combined first, second and third propylene polymer fractions preferably form a heterophasic propylene copolymer.

The preparation of the first, second and third propylene polymer fractions can comprise in addition to the (main) polymerization stages in the at least four polymerization reactors prior thereto a pre-polymerization in a pre-polymerization reactor upstream to the first polymerization reactor.

In the pre-polymerization reactor, a polypropylene is produced. The pre-polymerization is preferably conducted in the presence of the Ziegler-Natta catalyst system. According to this embodiment, the Ziegler-Natta catalyst system is introduced to the pre-polymerization step. However, this shall not exclude the option that at a later stage for instance further co-catalyst is added in the polymerization process, for instance in the first reactor. In one embodiment, all components of the Ziegler-Natta catalyst system are only added in the pre-polymerization reactor, if a pre-polymerization is applied.

The pre-polymerization reaction is typically conducted at a temperature of 0 to 60 °C, preferably from 15 to 50 °C, and more preferably from 1 to 45 °C.

The pressure in the pre-polymerization reactor is not critical but must be sufficiently high to maintain the reaction mixture in liquid phase. Thus, the pressure may be from 20 to 100 bar, for example 30 to 70 bar.

In a preferred embodiment, the pre-polymerization is conducted as bulk slurry polymerization in liquid propylene, i.e. the liquid phase mainly comprises propylene, with optionally inert components dissolved therein.

It is possible to add other components also to the pre-polymerization stage. Thus, hydrogen may be added into the pre-polymerization stage to control the molecular weight of the polypropylene as is known in the art. Further, antistatic additives may be used to prevent the particles from adhering to each other or to the walls of the reactor.

The precise control of the pre-polymerization conditions and reaction parameters is within the skill of the art.

Due to the above defined process conditions in the pre-polymerization, preferably a mixture of the Ziegler-Natta catalyst system and the polypropylene produced in the pre-polymerization reactor is obtained. Preferably, the Ziegler-Natta catalyst system is (finely) dispersed in the polypropylene. In other words, the Ziegler-Natta catalyst system introduced in the pre-polymerization reactor are split into smaller fragments that are evenly distributed within the growing polypropylene. The sizes of the introduced Ziegler-Natta catalyst system as well as of the obtained fragments are not of essential relevance for the instant invention and within the skilled knowledge.

As mentioned above, if a pre-polymerization is used, subsequent to said pre-polymerization, the mixture of the Ziegler-Natta catalyst system and the polypropylene produced in the pre-polymerization reactor is transferred to the first polymerization reactor. Typically the total amount of the polypropylene produced in the pre-polymerization reactor in the first, second and third propylene polymer fractions is rather low and typically not more than 5.0 wt.-%, more preferably not more than 4.0 wt.-%, still more preferably in the range from 0.5 to 4.0 wt.-%, like in the range 1.0 of to 3.0 wt.-%.

In case that pre-polymerization is not used, propylene and the other ingredients such as the Ziegler-Natta catalyst system are directly introduced into the first polymerization reactor.

The residence times of the polymerization mixtures in the different polymerization stages are adjusted to obtain the amounts of the first, second and third polymer fractions in the combined first, second and third polymer fractions.

Preferably the first propylene polymer fraction is present in an amount of from 35 to 55 wt.-%, more preferably from 40 to 50 wt.-%, based on the total weight of the first, second and third propylene polymer fractions. The amount of the polypropylene produced in the pre-polymerization reactor, if present, is generally added to the amount of the first propylene polymer fraction.

Preferably the second propylene polymer fraction is present in an amount of from 22 to 42 wt.-%, more preferably from 27 to 37 wt.-%, based on the total weight of the combined first, second and third propylene polymer fractions.

Preferably the third propylene polymer fraction is present in an amount of from 15 to 35 wt.-%, more preferably from 20 to 30 wt.-%, based on the total weight of the combined first, second and third polymer fractions.

According to the invention the first heterophasic propylene copolymer (A) is preferably obtained by a multistage polymerization process, as described above, in the presence of a Ziegler-Natta catalyst system.

As pointed out above in the specific process for the preparation of the first heterophasic propylene copolymer (A) as defined above, a specific Ziegler-Natta catalyst is preferably used.

Accordingly, the Ziegler-Natta catalyst system will be now described in more detail.

The catalyst used in the present invention is a solid Ziegler-Natta catalyst, which comprises compounds of a transition metal of Group 4 to 6 of IUPAC, like titanium, a Group 2 metal compound, like a magnesium, and an internal donor being preferably a non-phthalic compound, more preferably a non-phthalic acid ester, still more preferably being a diester of non-phthalic dicarboxylic acids as described in more detail below. Thus, the catalyst is fully free of undesired phthalic compounds. Further, the solid catalyst is free of any external support material, like silica or $MgCl_2$, but the catalyst is self-supported.

The Ziegler-Natta catalyst (ZN-C) can be further defined by the way as obtained.

Accordingly, the Ziegler-Natta catalyst (ZN-C) is preferably obtained by a process comprising the steps of

a)

$a_1$) providing a solution of at least a Group 2 metal alkoxy compound (Ax) being the reaction product of a Group 2 metal compound and a monohydric alcohol (A) comprising in addition to the hydroxyl moiety at least one ether moiety optionally in an organic liquid reaction medium; or

$a_2$) a solution of at least a Group 2 metal alkoxy compound (Ax') being the reaction product of a Group 2 metal compound and an alcohol mixture of the monohydric alcohol (A) and a monohydric alcohol (B) of formula ROH, optionally in an organic liquid reaction medium; or

$a_3$) providing a solution of a mixture of the Group 2 alkoxy compound (Ax) and a Group 2 metal alkoxy compound (Bx) being the reaction product of a Group 2 metal compound and the monohydric alcohol (B), optionally in an organic liquid reaction medium; or

$a_4$) providing a solution of Group 2 alkoxide of formula $M(OR_1)_n(OR_2)_m X_{2-n-m}$ or mixture of Group 2 alkoxides $M(OR_1)_{n'} X_{2-n'}$ and $M(OR_2)_{m'} X_{2-m'}$, where M is Group 2 metal, X is halogen, $R_1$ and $R_2$ are different alkyl groups of $C_2$ to $C_{16}$ carbon atoms, and $0 \leq n < 2$, $0 \leq m < 2$ and $n+m+(2-n-m) = 2$, provided that both n and m $\neq$ 0, $0 < n' \leq 2$ and $0 < m' \leq 2$; and

b) adding said solution from step a) to at least one compound of a transition metal of Group 4 to 6 and

c) obtaining the solid catalyst component particles,

and adding an internal electron donor, preferably a non-phthalic internal donor, at any step prior to step c).

The internal donor or precursor thereof is added preferably to the solution of step a).

According to the procedure above, the Ziegler-Natta catalyst can be obtained via precipitation method or via emulsion (liquid/liquid two-phase system) - solidification method depending on the physical conditions, especially temperature used in steps b) and c).

In both methods (precipitation or emulsion-solidification) the catalyst chemistry is the same.

In precipitation method combination of the solution of step a) with at least one transition metal compound in step b) is carried out and the whole reaction mixture is kept at least at 50°C, more preferably in the temperature range of 55°C to 110°C, more preferably in the range of 70°C to 100°C, to secure full precipitation of the catalyst component in form of a solid particles (step c).

In emulsion - solidification method in step b) the solution of step a) is typically added to the at least one transition metal compound at a lower temperature, such as from -10 to below 50°C, preferably from -5 to 30°C. During agitation of the emulsion the temperature is typically kept at -10 to below 40°C, preferably from -5 to 30°C. Droplets of the dispersed phase of the emulsion form the active catalyst composition. Solidification (step c) of the droplets is suitably carried out by heating the emulsion to a temperature of 70 to 150°C, preferably to 80 to 110°C.

The catalyst prepared by emulsion - solidification method is preferably used in the present invention.

In a preferred embodiment in step a) the solution of $a_2$) or $a_3$) are used, i.e. a solution of (Ax') or a solution of a mixture of (Ax) and (Bx).

Preferably, the Group 2 metal is magnesium.

The magnesium alkoxy compounds (Ax), (Ax') and (Bx) can be prepared *in situ in* the first step of the catalyst preparation process, step a), by reacting the magnesium compound with the alcohol(s) as described above, or said magnesium alkoxy compounds can be separately prepared magnesium alkoxy compounds or they can be even commercially available as ready magnesium alkoxy compounds and used as such in the catalyst preparation process of the invention.

Illustrative examples of alcohols (A) are monoethers of dihydric alcohols (glycol monoethers). Preferred alcohols (A) are $C_2$ to $C_4$ glycol monoethers, wherein the ether moieties comprise from 2 to 18 carbon atoms, preferably from 4 to 12 carbon atoms. Preferred examples are 2-(2-ethylhexyloxy)ethanol, 2-butyloxy ethanol, 2-hexyloxy ethanol and 1,3-propylene-glycol-monobutyl ether, 3-butoxy-2-propanol, with 2-(2-ethylhexyloxy)ethanol and 1,3-propylene-glycol-monobutyl ether, 3-butoxy-2-propanol being particularly preferred.

Illustrative monohydric alcohols (B) are of formula ROH, with R being straight-chain or branched $C_6$-$C_{10}$ alkyl residue. The most preferred monohydric alcohol is 2-ethyl-1-hexanol or octanol.

Preferably a mixture of Mg alkoxy compounds (Ax) and (Bx) or mixture of alcohols (A) and (B), respectively, are used and employed in a mole ratio of Bx:Ax or B:A from 8:1 to 2:1, more preferably 5:1 to 3:1.

Magnesium alkoxy compound may be a reaction product of alcohol(s), as defined above, and a magnesium compound selected from dialkyl magnesiums, alkyl magnesium alkoxides, magnesium dialkoxides, alkoxy magnesium halides and alkyl magnesium halides. Alkyl groups can be a similar or different $C_1$-$C_{20}$ alkyl, preferably $C_2$-$C_{10}$ alkyl. Typical alkyl-alkoxy magnesium compounds, when used, are ethyl magnesium butoxide, butyl magnesium pentoxide, octyl magnesium butoxide and octyl magnesium octoxide. Preferably the dialkyl magnesiums are used. Most preferred dialkyl magnesiums are butyl octyl magnesium or butyl ethyl magnesium.

It is also possible that magnesium compound can react in addition to the alcohol (A) and alcohol (B) also with a polyhydric alcohol (C) of formula R"$(OH)_m$ to obtain said magnesium alkoxide compounds. Preferred polyhydric alcohols, if used, are alcohols, wherein R" is a straight-chain, cyclic or branched $C_2$ to $C_{10}$ hydrocarbon residue, and m is an integer of 2 to 6.

The magnesium alkoxy compounds of step a) are thus selected from the group consisting of magnesium dialkoxides, diaryloxy magnesiums, alkyloxy magnesium halides, aryloxy magnesium halides, alkyl magnesium alkoxides, aryl magnesium alkoxides and alkyl magnesium aryloxides. In addition a mixture of magnesium dihalide and a magnesium dialkoxide can be used.

The solvents to be employed for the preparation of the present catalyst may be selected among aromatic and aliphatic straight chain, branched and cyclic hydrocarbons with 5 to 20 carbon atoms, more preferably 5 to 12 carbon atoms, or mixtures thereof. Suitable solvents include benzene, toluene, cumene, xylol, pentane, hexane, heptane, octane and nonane. Hexanes and pentanes are particular preferred.

Mg compound is typically provided as a 10 to 50 wt% solution in a solvent as indicated above. Typical commercially available Mg compound, especially dialkyl magnesium solutions are 20 - 40 wt% solutions in toluene or heptane.

The reaction for the preparation of the magnesium alkoxy compound may be carried out at a temperature of 40° to 70°C. Most suitable temperature is selected depending on the Mg compound and alcohol(s) used.

The transition metal compound of Group 4 to 6 is preferably a titanium compound, most preferably a titanium halide, like $TiCl_4$.

The non-phthalic internal donor used in the preparation of the catalyst used in the present invention is preferably selected from (di)esters of non-phthalic carboxylic (di)acids, 1,3-diethers, derivatives and mixtures thereof. Especially preferred donors are diesters of mono-unsaturated dicarboxylic acids, in particular esters belonging to a group comprising malonates, maleates, succinates, citraconates, glutarates, cyclohexene-1,2-dicarboxylates and benzoates, and any derivatives and/or mixtures thereof. Preferred examples are e.g. substituted maleates and citraconates, most preferably citraconates.

In emulsion method, the two phase liquid-liquid system may be formed by simple stirring and optionally adding (further) solvent(s) and additives, such as the turbulence minimizing agent (TMA) and/or the emulsifying agents and/or emulsion stabilizers, like surfactants, which are used in a manner known in the art for facilitating the formation of and/or stabilize the emulsion. Preferably, surfactants are acrylic or methacrylic polymers. Particular preferred are unbranched $C_{12}$ to $C_{20}$ (meth)acrylates such as poly(hexadecyl)-methacrylate and poly(octadecyl)-methacrylate and mixtures thereof. Turbulence minimizing agent (TMA), if used, is preferably selected from $\alpha$-olefin polymers of $\alpha$-olefin monomers with 6 to 20 carbon atoms, like polyoctene, polynonene, polydecene, polyundecene or polydodecene or mixtures thereof. Most preferable it is polydecene.

The solid particulate product obtained by precipitation or emulsion - solidification method may be washed at least once, preferably at least twice, most preferably at least three times with an aromatic and/or aliphatic hydrocarbons, preferably with toluene, heptane or pentane. The catalyst can further be dried, as by evaporation or flushing with nitrogen, or it can be slurried to an oily liquid without any drying step.

The finally obtained Ziegler-Natta catalyst is desirably in the form of particles having generally an average particle size range of 5 to 200 $\mu$m, preferably 10 to 100. Particles are compact with low porosity and have surface area below 20 $g/m^2$, more preferably below 10 $g/m^2$. Typically the amount of Ti is 1 to 6 wt%, Mg 10 to 20 wt% and donor 10 to 40 wt% of the catalyst composition.

Detailed description of preparation of catalysts is disclosed in WO 2012/007430, EP2610271, EP 261027 and EP2610272, which are incorporated here by reference.

The Ziegler-Natta catalyst is used in association with an alkyl aluminum cocatalyst and preferably with external donors.

As further component in the instant polymerization process an external donor is preferably present. Suitable external donors include certain silanes, ethers, esters, amines, ketones, heterocyclic compounds and blends of these. It is especially preferred to use a silane. It is most preferred to use silanes of the general formula

$$R^a_p R^b_q Si(OR^c)_{(4-p-q)}$$

wherein $R^a$, $R^b$ and $R^c$ denote a hydrocarbon radical, in particular an alkyl or cycloalkyl group, and wherein p and q are numbers ranging from 0 to 3 with their sum p + q being equal to or less than 3. $R^a$, $R^b$ and $R^c$ can be chosen independently from one another and can be the same or different. Specific examples of such silanes are (tert-butyl)$_2$Si(OCH$_3$)$_2$, (cyclohexyl)(methyl)Si(OCH$_3$)$_2$, (phenyl)$_2$Si(OCH$_3$)$_2$ and (cyclopentyl)$_2$Si(OCH$_3$)$_2$, or of general formula

$$Si(OCH_2CH_3)_3(NR^3R^4)$$

wherein $R^3$ and $R^4$ can be the same or different a represent a hydrocarbon group having 1 to 12 carbon atoms.

$R^3$ and $R^4$ are independently selected from the group consisting of linear aliphatic hydrocarbon group having 1 to 12 carbon atoms, branched aliphatic hydrocarbon group having 1 to 12 carbon atoms and cyclic aliphatic hydrocarbon group having 1 to 12 carbon atoms. It is in particular preferred that $R^3$ and $R^4$ are independently selected from the group consisting of methyl, ethyl, n-propyl, n-butyl, octyl, decanyl, iso-propyl, iso-butyl, iso-pentyl, tert.-butyl, tert.-amyl, neopentyl, cyclopentyl, cyclohexyl, methylcyclopentyl and cycloheptyl.

More preferably, both $R^3$ and $R^4$ are the same, yet more preferably both $R^3$ and $R^4$ are an ethyl group.

Especially preferred external donors are the dicyclopentyl dimethoxy silane donor (D-donor) or the cyclohexylmethyl dimethoxy silane donor (C-Donor).

In addition to the Ziegler-Natta catalyst and the optional external donor a co-catalyst has to be used. The co-catalyst is preferably a compound of group 13 of the periodic table (IUPAC), e.g. organo aluminum, such as an aluminum compound, like aluminum alkyl, aluminum halide or aluminum alkyl halide compound. Accordingly, in one specific embodiment the co-catalyst is a trialkylaluminium, like triethylaluminium (TEAL), dialkyl aluminium chloride or alkyl aluminium dichloride or mixtures thereof. In one specific embodiment the co-catalyst is triethylaluminium (TEAL).

Preferably, the ratio between the co-catalyst (Co) and the external donor (ED) [Co/ED] and/or the ratio between the co-catalyst (Co) and the transition metal (TM) [Co/TM] should be carefully chosen.

Accordingly,

(a) the mol-ratio of co-catalyst (Co) to external donor (ED) [Co/ED] must be in the range of 10 to 55, preferably is in the range of 15 to 50, more preferably is in the range of 20 to 45; and optionally

(b) the mol-ratio of co-catalyst (Co) to titanium compound (TC) [Co/TC] must be in the range of above 100 to 750, preferably is in the range of 150 to 600, still more preferably is in the range of 250 to 500.

The first heterophasic propylene copolymer (A) according to this invention is preferably produced in the presence of

(a) a Ziegler-Natta catalyst comprising compounds (TC) of a transition metal of Group 4 to 6 of IUPAC, a Group 2 metal compound and an internal donor, wherein said internal donor is a non-phthalic compound, preferably is a non-phthalic acid ester and still more preferably is a diester of non-phthalic dicarboxylic acids;

(b) optionally a co-catalyst (Co), and

(c) optionally an external donor (ED).

It is preferred that the internal donor (ID) is selected from optionally substituted malonates, maleates, succinates, glutarates, cyclohexene-1,2-dicarboxylates, benzoates and derivatives and/or mixtures thereof, preferably the internal donor (ID) is a citraconate. Additionally or alternatively, the molar-ratio of co-catalyst (Co) to external donor (ED) [Co/ED] is 10 to 55.

It is preferred that a nucleating agent is introduced to the composition during the polymerization process of the first heterophasic propylene copolymer (A). The nucleating agent is preferably introduced to the first heterophasic propylene copolymer (A) by first polymerizing a vinyl compound, preferably vinylcycloalkane, in the presence of the Ziegler-Natta catalyst system and the obtained reaction mixture of the polymer of the vinyl compound, preferably vinyl cyclohexane (VCH) polymer, and the catalyst system is then used for producing the first heterophasic propylene copolymer (A). The above incorporation of the polymeric nucleating agent to the first heterophasic propylene copolymer (A) during the polymerization of said first heterophasic propylene copolymer (A) is called herein as BNT-technology.

With regard to the BNT-technology reference is made to the international applications WO 99/24478, WO 99/24479 and particularly WO 00/68315. According to this technology a catalyst system, preferably a Ziegler-Natta procatalyst, can be modified by polymerizing a vinyl compound in the presence of the catalyst system, comprising in particular the special Ziegler-Natta procatalyst, an external donor and a cocatalyst, which vinyl compound has the formula: $CH_2=CH-CHR^1R^2$

wherein $R^1$ and $R^2$, together with the carbon atom they are attached to, form an optionally substituted saturated or unsaturated or aromatic ring or a fused ring system, wherein the ring or fused ring moiety contains four to 20 carbon atoms, preferably 5 to 12 membered saturated or unsaturated or aromatic ring or a fused ring system or independently represent a linear or branched $C_4$-$C_{30}$ alkane, $C_4$-$C_{20}$ cycloalkane or $C_4$-$C_{20}$ aromatic ring. Preferably $R^1$ and $R^2$, together with the C-atom wherein they are attached to, form a five- or six-membered saturated or unsaturated or aromatic ring or independently represent a lower alkyl group comprising from 1 to 4 carbon atoms. Preferred vinyl compounds for the preparation of a polymeric nucleating agent to be used in accordance with the present invention are in particular vinyl cycloalkanes, in particular vinyl cyclohexane (VCH), vinyl cyclopentane, and vinyl-2-methyl cyclohexane, 3-methyl-1-butene, 3-ethyl-1-hexene, 3-methyl-1-pentene, 4-methyl-1-pentene or mixtures thereof. VCH is a particularly preferred monomer.

The polymerized vinyl compound acts as an alpha-nucleating agent. The weight ratio of vinyl compound to solid catalyst component in the modification step of the catalyst is preferably of up to 5 (5:1), preferably up to 3 (3:1) most preferably from 0.5 (1:2) to 2 (2:1). The most preferred vinyl compound is vinylcyclohexane (VCH).

When a nucleating agent is introduced to the first heterophasic propylene copolymer (A) during the polymerization process, the amount of nucleating agent present in the first heterophasic propylene copolymer (A) is preferably not more than 500 ppm, more preferably not more than 200 ppm, still more preferably is in the range of 1.0 to 200 ppm, and most preferably is 5.0 to 100 ppm, based on the first heterophasic propylene copolymer (A) and the nucleating agent, preferably based on the total weight of the first heterophasic propylene copolymer (A) including all additives.

Second heterophasic propylene copolymer (B)

The heterophasic polypropylene copolymer (B) comprises a matrix phase and an elastomer phase dispersed therein.

The second heterophasic propylene copolymer (B), is characterized by

- a melt flow rate $MFR_2$ (230°C, 2.16 kg, ISO 1133) of 3.0 to 30 g/10min, preferably 4.0 to 25 g/10min, more preferably 5.0 to 20 g/10min;
- a soluble fraction (SF) content determined according to CRYSTEX QC analysis in the range from 18.0 to 45.0 wt.-%, preferably of 20.0 to 40.0 wt.-%; and
- an intrinsic viscosity of said soluble fraction IV(SF), as measured in decalin according to DIN ISO 1628/1 at 135°C, of 2.5 to 8.5 dl/g, preferably of 3.0 to 8.0 dl/g, more preferably of 3.5 to 7.5 dl/g.

The ethylene content (C2) in the soluble fraction C2(SF), as determined by FT-IR spectroscopy calibrated by quantitative $^{13}$C-NMR spectroscopy, is preferably from 18.0 to less than 40.0 wt.-%, preferably of 20.0 to 38.0 wt.-%, more preferably of 22.0 to 33.0 wt.-%.

The second heterophasic propylene copolymer (B) preferably has

- a crystalline fraction (CF) content determined according to CRYSTEX QC analysisin the range of from 55.0 to 82.0 wt.-%, more preferably from 60.0 to 80.0 wt.-%, and/or
- an ethylene content in said crystalline fraction C2(CF), as determined by FT-IR spectroscopy calibrated by quantitative $^{13}$C-NMR spectroscopy, of 0 to 2.5 wt.-%, more preferably of 0.5 to 2.2 wt.-%; and/or
- an intrinsic viscosity of said crystalline fraction IV(CF), measured in decalin according to DIN ISO 1628/1 at 135°C of 1.0 to 3.5 dl/g, more preferably of 1.5 to 3.0 dl/g; and/or
- a total content of units derived from ethylene (C2), as determined by FT-IR spectroscopy calibrated by quantitative $^{13}$C-NMR spectroscopy, of 5.0 to 20.0 wt.-%, preferably of more preferably of 5.5 to 18.0 wt.-%.

Preferably, the second heterophasic propylene copolymer (B) has one or more, preferably all, of the following properties:

- a melting temperature Tm of from 155 to 175°C, preferably from 157 to 172°C, more preferably from 160 to 170°C; and/or
- a crystallization temperature Tc of from 105 to 125°C, preferably from 107 to 122°C, more preferably from 110 to 120°C

both temperatures being determined by differential scanning calorimetry (DSC).

It is preferred that the second heterophasic propylene copolymer (B) consists of propylene units and ethylene units.

Although not measured the content of units derived from propylene (C3) in the soluble fraction (SF) preferably adds up to 100 wt.-% with the content of units derived from ethylene (C2) in the soluble fraction (SF).

The content of units derived from propylene (C3) in the soluble fraction (SF) is preferably more than 60.0 to 82.0 wt.-%, more preferably 62.0 to 80.0 wt.-%, still more preferably 67.0 to 78.0 wt.-%.

Although not measured the content of units derived from propylene (C3) in the crystalline fraction (CF) preferably adds up to 100 wt.-% with the content of units derived from ethylene (C2) in the crystalline fraction (CF).

The content of units derived from propylene (C3) in the crystalline fraction (CF) is preferably 97.5 to 100 wt.-%, more preferably 97.8 to 99.5 wt.-%.

The total content of units derived from propylene (C3) in the second heterophasic propylene copolymer (B) is preferably 80.0 to 95.0 wt.-%, more preferably 82.0 to 94.5 wt.-%.

The second heterophasic propylene copolymer (B) preferably is a virgin polymer.

The second heterophasic propylene copolymer (B) is preferably obtainable in a multistage polymerization process comparable to the multistage polymerization process as described for the first heterophasic propylene copolymer (A). The general description of the multistage polymerization process as described for the first heterophasic propylene copolymer (A) therefore also applies for the second heterophasic propylene copolymer (B)

Thereby, the temperatures, pressures H2/C3 ratios, C2/C3 ratios and residence times in the four subsequent polymerization reactors are accordingly adapted as to produce the second heterophasic propylene copolymer (B) as described above.

It is preferred that the operating temperature in the first polymerization reactor, preferably the loop reactor, is in the range from 72 to 95 °C, more preferably in the range from 75 to 92 °C, still more preferably in the range from 77 to 90 °C.

Typically, the pressure in the first polymerization reactor, preferably in the loop reactor, is in the range from 20 to 80 bar, preferably 30 to 70 bar, like 35 to 65 bar.

It is preferred that in the first polymerization reactor, preferably the loop reactor, a propylene homopolymer is produced. Thus, it is preferred that the first propylene polymer fraction is a propylene homopolymer fraction.

Preferably hydrogen is added in the first polymerization reactor in order to control the molecular weight, i.e. the melt flow rate $MFR_2$.

Preferably, the hydrogen to propylene ratio (H2/C3 ratio) in the first polypropylene reactor, preferably the loop reactor, is in the range from 35 to 100 mol/kmol, more preferably 50 to 75 mol/kmol.

It is preferred that the first propylene polymer fraction has a melt flow rate $MFR_2$ (230°C, 2.16 kg, ISO 1133) in the range of 50 to 500 g/10 min, preferably in the range of 75 to 350 g/10 min, more preferably in the range of 100 to 250 g/10 min.

It is preferred that the operating temperature in the second polymerization reactor, preferably the first gas phase reactor, is in the range from 75 to 95 °C, more preferably in the range from 78 to 92 °C.

Typically, the pressure in the second polymerization reactor, preferably in the first gas phase reactor, is in the range from 5 to 50 bar, preferably 15 to 40 bar.

It is preferred that in the second polymerization reactor, preferably the first gas phase reactor, a propylene homopolymer is produced. Thus, it is preferred that the second propylene polymer fraction is a propylene homopolymer fraction.

Preferably hydrogen is added in the second polymerization reactor in order to control the molecular weight, i.e. the melt flow rate $MFR_2$.

Preferably, the hydrogen to propylene ratio (H2/C3 ratio) in the second polypropylene reactor, preferably the first gas phase reactor, is in the range from 10 to 50 mol/kmol, more preferably 15 to 35 mol/kmol.

It is preferred that the combined first and second propylene polymer fractions have a melt flow rate $MFR_2$ (230°C, 2.16 kg, ISO 1133) in the range of 20 to 150 g/10 min, preferably in the range of 30 to 100 g/10 min, more preferably in the range of 40 to 75 g/10 min.

It is preferred that the operating temperature in the third polymerization reactor, preferably the second gas phase reactor, is in the range from 75 to 95 °C, more preferably in the range from 78 to 92 °C.

Typically, the pressure in the third polymerization reactor, preferably in the second gas phase reactor, is in the range from 5 to 50 bar, preferably 15 to 40 bar.

In the third polymerization reactor, preferably the second gas phase reactor, a propylene ethylene copolymer is produced. Thus, the third propylene polymer fraction is a propylene ethylene copolymer fraction.

The ethylene to propylene ratio (C2/C3 ratio) in the third polymerization polymerization reactor, preferably the second gas phase reactor, is in the range from 100 to 500 mol/kmol, more preferably 150 to 300 mol/kmol.

Due to the high ethylene to propylene ratio (C2/C3 ratio) the third propylene copolymer fraction preferably is an elastomeric block copolymer with propylene rich sections and ethylene rich sections.

Preferably hydrogen is added in the third polymerization reactor in order to control the molecular weight, i.e. the melt flow rate $MFR_2$.

Preferably, the hydrogen to ethylene ratio (H2/C2 ratio) in the third polymerization reactor, preferably the second gas phase reactor, is in the range from 5 to 40 mol/kmol, more preferably 10 to 30 mol/kmol.

It is preferred that the combined first, second and third propylene polymer fractions have a melt flow rate $MFR_2$ (230°C, 2.16 kg, ISO 1133) in the range of 5 to 100 g/10 min, preferably in the range of 10 to 75 g/10 min, more preferably in the range of 15 to 50 g/10 min.

It is preferred that the operating temperature in the fourth polymerization reactor, preferably the third gas phase reactor, is in the range from 75 to 95 °C, more preferably in the range from 78 to 92 °C.

Typically, the pressure in the fourth polymerization reactor, preferably in the third gas phase reactor, is in the range from 5 to 50 bar, preferably 15 to 40 bar.

In the fourth polymerization reactor, preferably the third gas phase reactor, a propylene ethylene copolymer is produced. Thus, the fourth propylene polymer fraction is a propylene ethylene copolymer fraction.

The ethylene to propylene ratio (C2/C3 ratio) in the fourth polymerization polymerization reactor, preferably the third gas phase reactor, is in the range from 100 to 500 mol/kmol, more preferably 150 to 300 mol/kmol.

Due to the high ethylene to propylene ratio (C2/C3 ratio) the fourth propylene copolymer fraction preferably is an elastomeric block copolymer with propylene rich sections and ethylene rich sections.

Preferably hydrogen is added in the fourth polymerization reactor in order to control the molecular weight, i.e. the melt flow rate $MFR_2$.

Preferably, the hydrogen to ethylene ratio (H2/C2 ratio) in the fourth polymerization reactor, preferably the third gas phase reactor, is in the range from 3 to 35 mol/kmol, more preferably 5 to 25 mol/kmol.

It is preferred that the combined first, second, third and fourth propylene polymer fractions have a melt flow rate $MFR_2$ (230°C, 2.16 kg, ISO 1133) in the range of 3.0 to 30 g/10min, preferably 4.0 to 25 g/10min, more preferably 5.0 to 20 g/10min.

Further the combined first, second, third and fourth propylene polymer fractions preferably have a total comonomer content, preferably ethylene (C2) content in the range of 5.0 to 20.0 wt.-%, preferably of more preferably of 5.5 to 18.0 wt.-%, based on the total weight of the combined first, second, third and fourth propylene polymer fractions, as determined by FT-IR spectroscopy calibrated by quantitative $^{13}$C-NMR spectroscopy.

Preferably the first propylene polymer fraction is present in an amount of from 25 to 45 wt.-%, more preferably from 30 to 40 wt.-%, based on the total weight of the combined first, second, third and fourth propylene polymer fractions. The amount of the polypropylene produced in the pre-polymerization reactor, if present, is generally added to the amount of the first propylene polymer fraction.

Preferably the second propylene polymer fraction is present in an amount of from 30 to 50 wt.-%, more preferably from 35 to 45 wt.-%, based on the total weight of the combined first, second, third and fourth propylene polymer fractions.

Preferably the third propylene polymer fraction is present in an amount of from 5 to 25 wt.-%, more preferably from 10 to 20 wt.-%, based on the total weight of the combined first, second, third and fourth propylene polymer fractions.

Preferably the fourth propylene polymer fraction is present in an amount of from 3 to 20 wt.-%, more preferably from 5 to 15 wt.-%, based on the total weight of the combined first, second, third and fourth propylene polymer fractions.

According to the invention the second heterophasic propylene copolymer (B) is preferably obtained by a multistage polymerization process, as described above, in the presence of a Ziegler-Natta catalyst system.

It is appreciated that there are no specific restrictions regarding the catalyst system as long as a Ziegler-Natta catalyst system is used.

As regards catalyst systems suitable for preparing the heterophasic propylene copolymer (B), reference is made to e.g. WO 2014/023603, EP 591224, WO 2012/007430, EP 2415790, EP 2610270, EP 2610271, EP 2610272, EP 2610273, EP 2960257 and EP 2960256 which are incorporated herein by reference.

In a further embodiment, the Ziegler-Natta catalyst system can be modified by polymerising a vinyl compound in the presence of the catalyst system as described above for the Ziegler-Natta catalyst system preferably used for the polymerization of the first heterophasic propylene copolymer (A).

Ethylene-based plastomer (C)

The ethylene-based plastomer (C) is preferably copolymer of ethylene with comonomer units selected from alpha-olefins having from 3 to 12 carbon atoms, preferably from alpha-olefins having from 4 to 10 carbon atoms, most preferably from 1-butene or 1-octene. Ethylene-based plastomers are usually added for further improving the impact properties of the composition.

Ethylene-based plastomers are usually polymerized in the presence of a metallocene catalyst. For polymerization, usually a solution polymerization process is used.

The ethylene-based plastomer (C) preferably is a virgin polymer.

The ethylene-based plastomer (C) preferably has one or more, preferably all, of the following properties:

- a melt flow rate MFR$_2$ (190°C, 2.16 kg, ISO 1133) of 0.5 to 25.0 g/10min, preferably 0.8 to 20.0 g/10min; and
- a density of 850 to 900 kg/m$^3$, preferably from 860 to 895 kg/m$^3$, more preferably from 865 to 895 kg/m$^3$, still more preferably from 870 to 890 kg/m$^3$.

The ethylene based plastomer (C) preferably has a melting temperature of from 50 to 85°C, preferably from 65 to 80°C.

Further, the ethylene based plastomer preferably has flexural modulus, determined according to ISO 178, of not more than 100 MPa, preferably from 10 to 50 MPa.

Such ethylene-based plastomer are commercially available under the tradename Engage, Exact, Queo, Tafmer or others.

Inorganic Filler (D)

The inorganic filler (D) is preferably talc.

The inorganic filler, preferably talc, (D) preferably has a median particle size dso before compounding of 1.0 to 20.0 micrometers, preferably 1.5 to 15.0 micrometers.

Further, the inorganic filler, preferably talc, (D) preferably has a top-cut particle size $d_{95}$ before compounding of 5.0 to 50.0 micrometers, preferably 8.0 to 40.0 micrometers.

The median particle size and top-cut particle are usually derivable from the technical information released by the supplier. However, they can also be measured by any suitable method for measuring particle sizes like Sedigraph analysis or laser diffraction.

Such inorganic fillers are commercially available.

Propylene homopolymer (E)

The optional propylene homopolymer (E) preferably has a melt flow rate MFR$_2$ (230°C, 2.16 kg, ISO 1133) of not more than 100 g/10min, preferably 1 to 95 g/10 min, more preferably 5 to 80 g/10 min.

Further, the optional propylene homopolymer (E) preferably has a melting temperature Tm, determined by DSC according to ISO 11357-3, of from 150 to 170°C, preferably from 152 to 167°C.

Still further, the optional propylene homopolymer (E) preferably has a xylene cold solubles (XCS) content of not more than 5.0 wt.-%, more preferably from 0.3 to 3.0 wt.-%, based on the total weight of the propylene homopolymer (E).

The optional propylene homopolymer (E) preferably is a virgin polymer.

Such propylene homopolymers are usually added for further improving the flowability of the composition.

Such propylene homopolymers are commercially available.

Additives

Additives are commonly used in the composition according to the present invention. Preferably, the additives are selected from one or more of antioxidant(s), UV stabilizer(s), slip agent(s), nucleating agent(s), pigment(s), lubricant(s), masterbatch polymer(s) and/or antifogging agents and combinations thereof. These additives are well known in the polymer industry and their use will be familiar to the skilled practitioner. Any additives, which are present, may be added as an isolated raw material or in a mixture with a carrier polymer, i.e. in a so-called master batch.

Additives are usually present in the composition in an amount of from 0.1 to 5.0 wt.-%, still more preferably in an amount of from 0.5 to 3.5 wt.-%, based on the total weight of the composition.

Article

In another aspect, the present invention relates to an article, preferably an injection moulded article, more preferably an injection moulded automotive article comprising the composition as described above or below.

The article preferably shows a superior balance of properties in regard of a high form stability assessed as low shrinkage and a high paint adhesion assessed as the failed or delaminated coated area. Additionally, the article preferably shows high toughness after processing, indicated in a low initial coefficient of linear thermal expansion (CLTE).

It is preferred that the article has a failed or delaminated coated area in the paint adhesion test as defined in the experimental section below in mm$^2$ of below 20 mm$^2$, preferably from 0 to 15 mm$^2$, more preferably from 0 to 12 mm$^2$.

Still further, the article preferably has an isotropic area shrinkage of from 0.20 to 0.80%, more preferably from 0.25 to 0.75%.

Furthermore, the article preferably has a shrinkage in flow of from 0.20 to 0.90%, more preferably from 0.25 to 0.80%.

Additionally, the article preferably has a shrinkage cross flow of from 0.20 to 0.90%, more preferably from 0.25 to 0.80%.

Further, the article preferably has a coefficient of linear thermal expansion at a temperature range from +23 to +80°C at a heating rate of 1 °C/min in machine direction (CLTE 23-80°C, MD) of below 90 $\mu$m/m°C, more preferably from 60 to 85 $\mu$m/m°C.

Still further, the article preferably has a coefficient of linear thermal expansion at a temperature range from +23 to +80°C at a heating rate of 1 °C/min in transverse direction (CLTE 23-80°C, TD) of below 140 $\mu$m/m°C, more preferably from 110 to 135 $\mu$m/m°C. Further, the article preferably has a coefficient of linear thermal expansion at a temperature range from -30 to +80°C at a heating rate of 1 °C/min in machine direction (CLTE -30-80°C, MD) of below 75 $\mu$m/m°C, more preferably from 30 to 70 $\mu$m/m°C.

Still further, the article preferably has a coefficient of linear thermal expansion at a temperature range from -30 to +80°C at a heating rate of 1 °C/min in transverse direction (CLTE -30-80°C, TD) of below 125 $\mu$m/m°C, more preferably from 70 to 110 $\mu$m/m°C.

Due to the superior balance of properties, the article qualifies for painted and non-painted automotive articles. The articles are therefore very versatile and can be used for interior and exterior automotive applications including bumpers, door claddings and pillar trims.

Use

In yet another aspect the present invention relates to the use of the composition as described above or below for injection moulding of articles, preferably automotive articles, like exterior or interior automotive articles including bumpers, door claddings and pillar trims.

**Experimental Section**

The following Examples are included to demonstrate certain aspects and embodiments of the invention as described in the claims. It should be appreciated by those of skill in the art, however, that the following description is illustrative only and should not be taken in any way as a restriction of the invention.

**Test Methods**

**a) CRYSTEX**

**Determination of Crystalline and soluble fractions and their respective properties (IV and Ethylene content)**

The crystalline (CF) and soluble fractions (SF) of the polypropylene (PP) compositions as well as the comonomer content and intrinsic viscosities of the respective fractions were analyzed by use of the CRYSTEX instrument, Polymer Char (Valencia, Spain). Details of the technique and the method can be found in literature (Ljiljana Jeremic, Andreas Albrecht, Martina Sandholzer & Markus Gahleitner (2020) Rapid characterization of high-impact ethylene-propylene copolymer composition by crystallization extraction separation: comparability to standard separation methods, International Journal of Polymer Analysis and Characterization, 25:8, 581-596)

The crystalline and amorphous fractions are separated through temperature cycles of dissolution at 160°C, crystallization at 40°C and re-dissolution in 1,2,4-trichlorobenzene at 160°C. Quantification of SF and CF and determination of ethylene content (C2) are achieved by means of an integrated infrared detector (IR4) and for the determination of the intrinsic viscosity (IV) an online 2-capillary viscometer is used.

The IR4 detector is a multiple wavelength detector measuring IR absorbance at two different bands ($CH_3$ stretching vibration (centred at app. 2960 cm$^{-1}$) and the CH stretching vibration (2700-3000 cm$^{-1}$) that are serving for the determination of the concentration and the Ethylene content in Ethylene-Propylene copolymers. The IR4 detector is calibrated with series of 8 EP copolymers with known Ethylene content in the range of 2 wt.-% to 69 wt.-% (determined by $^{13}$C-NMR) and each at various concentrations, in the range of 2 and 13mg/ml. To encounter for both features, concentration and ethylene content at the same time for various polymer concentrations expected during Crystex analyses the following calibration equations were applied:

$$\text{Conc} = a + b*\text{Abs(CH)} + c*(\text{Abs(CH)})^2 + d*\text{Abs(CH}_3) + e*(\text{Abs(CH}_3)^2 + f*\text{Abs(CH)}*\text{Abs(CH}_3) \qquad \text{(Equation 1)}$$

$$\text{CH}_3/1000\text{C} = a + b*\text{Abs(CH)} + c* \text{Abs(CH}_3) + d * (\text{Abs(CH}_3)/\text{Abs(CH)}) + e * (\text{Abs(CH}_3)/\text{Abs(CH)})^2 \qquad \text{(Equation 2)}$$

The constants a to e for equation 1 and a to f for equation 2 were determined by using least square regression analysis.

The $\text{CH}_3/1000\text{C}$ is converted to the ethylene content in wt.-% using following relationship:

$$\text{wt.-\% (Ethylene in EP Copolymers)} = 100 - \text{CH}_3/1000\text{TC} * 0.3 \qquad \text{(Equation 3)}$$

Amounts of Soluble Fraction (SF) and Crystalline Fraction (CF) are correlated through the XS calibration to the "Xylene Cold Soluble" (XCS) quantity and respectively Xylene Cold Insoluble (XCI) fractions, determined according to standard gravimetric method as per ISO16152. XS calibration is achieved by testing various EP copolymers with XS content in the range 2-31 wt.-%. The determined XS calibration is linear:

$$\text{wt.-\% XS} = 1{,}01* \text{wt\% SF} \qquad \text{(Equation 4)}$$

Intrinsic viscosity (IV) of the parent EP copolymer and its soluble and crystalline fractions are determined with a use of an online 2-capillary viscometer and are correlated to corresponding IV's determined by standard method in decalin according to ISO 1628-1. Calibration is achieved with various EP PP copolymers with IV = 2-4 dL/g. The determined calibration curve is linear:

$$\text{IV (dL/g)} = a* \text{Vsp/c} \qquad \text{(equation 5)}$$

The samples to be analyzed are weighed out in concentrations of 10mg/ml to 20mg/ml. To avoid injecting possible gels and/or polymers which do not dissolve in TCB at 160°C, like PET and PA, the weighed out sample was packed into a stainless steel mesh MW 0,077/D 0,05mmm.

After automated filling of the vial with 1,2,4-TCB containing 250 mg/l 2,6-tert-butyl-4-methylphenol (BHT) as antioxidant, the sample is dissolved at 160°C until complete dissolution is achieved, usually for 60 min, with constant stirring of 400rpm. To avoid sample degradation, the polymer solution is blanketed with the N2 atmosphere during dissolution.

A defined volume of the sample solution is injected into the column filled with inert support where the crystallization of the sample and separation of the soluble fraction from the crystalline part is taking place. This process is repeated two times. During the first injection the whole sample is measured at high temperature, determining the IV [dl/g] and the C2 [wt.-%] of the PP composition. During the second injection the soluble fraction (at low temperature) and the crystalline fraction (at high temperature) with the crystallization cycle are measured (wt.-% SF, wt.-% C2, IV).

**b) Xylene cold soluble fraction (XCS, wt.-%)**

Xylene cold soluble fraction (XCS) was determined at 25 °C according ISO 16152; first edition; 2005-07-01. The part which remains insoluble is the xylene cold insoluble (XCI) fraction.

**c) Intrinsic viscosity**

Intrinsic viscosity was measured according to DIN ISO 1628/1, October 1999 (in Decalin at 135 °C).

**d) Charpy Notched Impact Strength**

was determined according to ISO 179-1 eA at +23 °C, at -20 °C and at -30 °C on injection moulded specimens of 80 × 10 × 4 mm³ prepared according to EN ISO 1873-2. The measurement was done after 96 h conditioning time at 23 °C of the specimen.

**e) Tensile properties**

Tensile modulus, tensile elongation at yield and tensile elongation at break were measured according to ISO 527-2 (cross head speed = 1 mm/min; test speed 50 mm/min at 23 °C) using injection moulded specimens 1B prepared as described in EN ISO 1873-2 (dog bone shape, 4 mm thickness). The measurement was done after 96 h conditioning time at 23 °C of the specimen.

**f) Instrumented Puncture Test**

Instrumented puncture test was performed on 60 × 60 × 3 mm³ injection-moulded plaques at 23°C, -20°C and -30°C according to ISO 6603-2:2000. The measurement was done after 96 h conditioning time of the specimen at 23 °C, -20°C and -30°C.

**g) Comonomer content**

**Poly(propylene-co-ethylene) - ethylene content - IR spectroscopy**

Quantitative infrared (IR) spectroscopy was used to quantify the ethylene content of the poly(ethylene-co-propene) copolymers through calibration to a primary method. Calibration was facilitated through the use of a set of in-house non-commercial calibration standards of known ethylene contents determined by quantitative $^{13}C$ solution-state nuclear magnetic resonance (NMR) spectroscopy. The calibration procedure was undertaken in the conventional manner well documented in the literature. The calibration set consisted of 38 calibration standards with ethylene contents ranging 0.2-75.0 wt.% produced at either pilot or full scale under a variety of conditions. The calibration set was selected to reflect the typical variety of copolymers encountered by the final quantitative IR spectroscopy method. Quantitative IR spectra were recorded in the solid-state using a Bruker Vertex 70 FTIR spectrometer. Spectra were recorded on 25×25 mm square films of 300 μm thickness prepared by compression moulding at 180 - 210°C and 4 - 6 MPa. For samples with very high ethylene contents (>50 mol-%) 100 μm thick films were used. Standard transmission FTIR spectroscopy was employed using a spectral range of 5000-500 cm$^{-1}$, an aperture of 6 mm, a spectral resolution of 2 cm$^{-1}$, 16 background scans, 16 spectrum scans, an interferogram zero filling factor of 64 and Blackmann-Harris 3-term apodisation. Quantitative analysis was undertaken using the total area of the $CH_2$ rocking deformations at 730 and 720 cm$^{-1}$ ($A_Q$) corresponding to $(CH_2)_{>2}$ structural units (integration method G, limits 762 and 694 cm$^{-1}$). The quantitative band was normalised to the area of the CH band at 4323 cm$^{-1}$ ($A_R$) corresponding to CH structural units (integration method G, limits 4650, 4007 cm$^{-1}$). The ethylene content in units of weight percent was then predicted from the normalised absorption ($A_Q$ / $A_R$) using a quadratic calibration curve. The calibration curve having previously been constructed by ordinary least squares (OLS) regression of the normalised absorptions and primary comonomer contents measured on the calibration set.

**Poly(propylene-co-ethylene)** - ethylene content - **$^{13}C$ NMR spectroscopy**

Quantitative $^{13}C\{^1H\}$ NMR spectra were recorded in the solution-state using a Bruker Avance III 400 NMR spectrometer operating at 400.15 and 100.62 MHz for $^1H$ and $^{13}C$ respectively. All spectra were recorded using a $^{13}C$ optimised 10 mm extended temperature probehead at 125°C using nitrogen gas for all pneumatics. Approximately 200 mg of material was dissolved in 3 ml of 1,2-tetrachloroethane-d$_2$ (TCE-d$_2$) along with chromium (III) acetylacetonate (Cr(acac)$_3$) resulting in a 65 mM solution of relaxation agent in solvent (Singh, G., Kothari, A., Gupta, V., Polymer Testing 28 5 (2009), 475).

To ensure a homogenous solution, after initial sample preparation in a heat block, the NMR tube was further heated in a rotatory oven for at least 1 hour. Upon insertion into the magnet the tube was spun at 10 Hz. This setup was chosen primarily for the high resolution and quantitatively needed for accurate ethylene content quantification. Standard single-pulse excitation was employed without NOE, using an optimised tip angle, 1 s recycle delay and a bi-level WALTZ16 decoupling scheme (Zhou, Z., et al. J. Mag. Reson. 187 (2007) 225, and in Busico, V., et al, Macromol. Rapid Commun. 2007, 28, 1128). A total of 6144 (6k) transients were acquired per spectra. Quantitative $^{13}C\{^1H\}$ NMR spectra were processed, integrated and relevant quantitative properties determined from the integrals. All chemical shifts were indirectly referenced to the central methylene group of the ethylene block (EEE) at 30.00 ppm using the chemical shift of the solvent. This approach allowed comparable referencing even when this structural unit was not present. Characteristic signals corresponding to the incorporation of ethylene were observed (Cheng, H. N., Macromolecules 17 (1984), 1950) and the comonomer fraction calculated as the fraction of ethylene in the polymer with respect to all monomer in the polymer:

$$f_E = ( E / ( P + E )$$

The comonomer fraction was quantified using the method of Wang et. al. (Wang, W-J., Zhu, S., Macromolecules 33 (2000), 1157) through integration of multiple signals across the whole spectral region in the $^{13}C\{^1H\}$ spectra. This method was chosen for its robust nature and ability to account for the presence of regio-defects when needed. Integral regions were slightly adjusted to increase applicability across the whole range of encountered comonomer contents. For systems with very low ethylene content where only isolated ethylene in PPEPP sequences were observed the method of Wang et. al. was modified reducing the influence of integration of sites that are no longer present. This approach reduced the overestimation of ethylene content for such systems and was achieved by reduction of the number of sites used to determine the absolute ethylene content to

$$E = 0.5( S_{\beta\beta} + S_{\beta\gamma} + S_{\beta\delta} + 0.5( S_{\alpha\beta} + S_{\alpha\gamma}))$$

Through the use of this set of sites the corresponding integral equation becomes

$$E = 0.5( I_H + I_G + 0.5( I_C + I_D ))$$

using the same notation used in the article of Wang et. al. (Wang, W-J., Zhu, S.,
**[0266]** Macromolecules 33 (2000), 1157). Equations used for absolute propylene content were not modified. The mole percent comonomer incorporation was calculated from the mole fraction:

$$E\ [mol\text{-}\%] = 100 * f_E.$$

The weight percent comonomer incorporation was calculated from the mole fraction:

$$E\ [wt.\text{-}\%] = 100 * ( f_E * 28.06 ) / ( (f_E * 28.06) + ((1\text{-}f_E) * 42.08) ).$$

**h) MFR**

Melt flow rates were measured with a load of 2.16 kg (MFR$_2$) at 230 °C (polypropylene based materials) or at 190 °C (polyethylene based materials). The melt flow rate is that quantity of polymer in grams which the test apparatus standardized to ISO 1133 extrudes within 10 minutes at a temperature of 230 °C (or 190°C) under a load of 2.16 kg.

**i) Density**

Density was measured according to ISO 1183-187. Sample preparation was done by compression moulding in accordance with ISO 1872-2:2007.

**j) DSC analysis, melting temperature (T$_m$) and crystallization temperature (T$_c$)**

measured with a TA Instrument Q200 differential scanning calorimetry (DSC) on 5 to 7 mg samples. DSC is run according to ISO 11357 / part 3 / method C2 in a heat / cool / heat cycle with a scan rate of 10 °C/min in the temperature range of -30 to +225°C. Crystallization temperature (T$_c$) and crystallization enthalpy (H$_c$) are determined from the cooling step, while melting temperature (T$_m$) and melting enthalpy (H$_m$) are determined from the second heating step.

**k) Heat DeflectionTemperature (HDT)**

The HDT was determined on injection moulded test specimens of $80 \times 10 \times 4\ mm^3$ prepared according to ISO 1873-2 and stored at +23°C for at least 96 hours prior to measurement. The test was performed on flatwise supported specimens according to ISO 75, condition B, with a nominal surface stress of 0.45 MPa.

**l) Coefficient of linear thermal expansion (CLTE)**

The coefficient of linear thermal expansion (CLTE) was determined in accordance with ISO 11359-2:1999 on 10 mm long pieces cut from the same injection moulded specimens as used for the determination of the Charpy Notched Impact Strength. The measurement was performed in a temperature range from -30 to +80°C at a heating rate of 1 °C/min and a temperature range from 23 to +80°C at a heating rate of 1 °C/min in machine direction, respectively.

**m) Paint adhesion**

Adhesion is characterized as the resistance of decorative coatings such as paints when subjected to high-pressure cleaner washing following certain conditions as described below. Injection moulded sample plates (150 mm × 80 mm × 3 mm) were produced at 240°C melt temperature and 50°C mould temperature. The flow front velocity was 100 mm/s. Prior coating, the plaques were cleaned with Zeller Gmelin Divinol® mm/s for 5 min. Subsequently, the surface was activated via flaming, where a burner at a speed of 670 mm/s spreads a mixture of propane (9 1/min) and air (180 1/min) in a ratio of 1:20 on the polymer substrate. Afterwards, the polymer substrate was coated with a primer-free 2 layer system, i.e. a base coat and a clear coat. The step of flaming was performed two times.

The decorative coating was incised down to the substrate at a total depth of about 500 $\mu$m (including coating and substrate) with a cutting tool making a cross with 100 mm long branches. On each coated substrate, 3 lines with the corresponding cross were incised. The incised area was further exposed to a steam of hot water with temperature $T$ was directed for time $t$ at distance $d$ under angle $\alpha$ to the surface of the test panel. Pressure of the water jet results from the water flow rate and is determined by the type of nozzle installed at the end of the water pipe.

The following parameters were used:

T (water) = 68°C; t = 30 s; d = 100 mm, $\alpha$ = 90°, water pressure of 65 bar, nozzle type = Walter 13/32.

The adhesion was assessed by quantifying the failed or delaminated coated area in mm$^2$ per test line. For each example, 5 panels (150 mm × 80 mm × 3 mm) have been tested. For this purpose, an image of the test line before and after steam jet exposure was taken. Then the delaminated area was calculated with an image processing software. The average failed area for 3 test lines on 5 test specimens (i.e. in total the average of 15 test points) was reported as average failed area. SD is the standard deviation, which is determined according to the following formula:

$$\text{Sample standard deviation} = \sqrt{\frac{\sum(x-\bar{x})^2}{(n-1)}}$$

wherein:

$x$ are the observed values;
$\bar{x}$ is the mean of the observed values; and
n is the number of observations.

**n) Isotropic area shrinkage**

The area shrinkage was calculated from shrinkage data determined on circular sector plates of 320 mm radius, 20 ° opening angle and 2.8 mm thickness produved by injection moulding with an Engel ES 1350/350 machine and filled through a rectangular gate of 7.6 × 2.8 mm$^2$ at the base of the sector. A melt temperature of 240 °C, a mould temperature of 25 °C and a filling time of 3.5 s were used, followed by a holding time of 20 s at a holding pressure of 400 bar.

Instead of measuring the external dimension of the plates, a pattern of circular dots was generated on the plates by eroded spots of 1 mm diameter at distances between 5 and 10 mm. The original pattern is recorded immediately after de-moulding by an OGP Smartscope Flash 400 optical gauging system and used as dimensional reference. After 96 h at 23 °C, the post-shrinkage moulding pattern is determined and all deviations of point-to-point distances are recorded. For calculating the isotropic area shrinkage, a number of measuring points is connected by vectors and the resulting area determined, with A being the area after 96 h and Ao the area before that period. The isotropic area shrinkage, $S_{iso}$, is then calculated as

$$S_{iso} = 1 - \sqrt{\frac{\sum A}{\sum A_0}}$$

**o) Shrinkage in flow and shrinkage cross flow**

Shrinkage in flow and shrinkage cross flow were determined on film gate injection moulded articles. One is a circular sector (radius 300 mm and opening angle of 20 °) and the other one a stripe (340×65 mm). 2.8 mm thick specimen were injection moulded at the same time at a back pressure of 400 bar. The melt temperature is 240 °C and the temperature of the tool 25 °C, respectively. Average flow front velocity is 3.5 ± 0.2 mm/s. After the injection moulding process the shrinkage of the specimens is measured at 23 °C and 50 % humidity. The measurement was done 96 hours after the injection moulding.

**Experiments**

a) Preparation of HECO A1-A6 and HECO B

Catalyst system:

For the polymerization process of HECO A-1 to HECO A-6, a Ziegler-Natta type catalyst (ZN1) as used for the inventive examples of WO 2016/066446 A1 and described prepolymerized with vinylcyclohexane to achieve nucleation with poly(vinylcyclohexane) was used.

Nucleation by prepolymerization with vinylcyclohexane is described in EP 2 960 256 B1 and EP 2 960 279 B1 in detail. These documents are incorporated by reference.

For the polymerization process of HECO B a traditional trans-esterified high yield $MgCl_2$-supported Ziegler-Natta polypropylene catalyst component comprising diethyl phthalate as internal donor (ZN2) was used. The catalyst component and its preparation concept are described in general for example in patent publications EP491566, EP591224 and EP586390. Accordingly, the catalyst component was prepared as follows: first, 0.1 mol of $MgCl_2 \times 3$ EtOH was suspended under inert conditions in 250 ml of decane in a reactor at atmospheric pressure. The solution was cooled to -15°C and the 300 ml of cold $TiCl_4$ was added while maintaining the temperature at said temperature. Then, the temperature of the slurry was increased slowly to 20 °C. At this temperature, 0.02 mol of dioctylphthalate (DOP) was added to the slurry. After the addition of the phthalate, the temperature was raised to 135 °C during 90 minutes and the slurry was allowed to stand for 60 minutes. Then, another 300 ml of $TiCl_4$ was added and the temperature was kept at 135 °C for 120 minutes. After this, the catalyst was filtered from the liquid and washed six times with 300 ml heptane at 80 °C. Then, the solid catalyst component was filtered and dried.

Polymerization of HECO A-1 to A-6

HECO A1-A6 were made in prepolymerization / loop reactor / gas phase reactor 1 / gas phase reactor 2 configuration followed by a pelletization step. The catalyst systems defined above was used in combination with triethyl-aluminium (TEAL) as co-catalyst and dicyclopentadienyl-dimethoxy silane (donor D) as external donor.

The polymer powders of HECO A-1 to HECO A-6 were compounded in a co-rotating twin-screw extruder Coperion ZSK 57 at 220°C with 0.15 wt.-% antioxidant (Irganox B215FF from BASF AG, Germany; this is a 1:2-mixture of Pentaerythrityl-tetrakis(3-(3',5'-di-tert. butyl-4-hydroxyphenyl)-propionate, CAS-no. 6683-19-8, and Tris (2,4-di-t-butylphenyl) phosphite, CAS-no. 31570-04-4); 0.05 wt.-% of of Ca-stearate (CAS-no. 1592-23-0, commercially available from Faci, Italy).

The polymerization conditions of HECO A-1 to A-6 are shown below in Table 1.

Polymerization of HECO B

HECO B was made in prepolymerization / loop reactor / gas phase reactor 1 / gas phase reactor 2 / gas phase reactor 3 configuration followed by a pelletization step. The catalyst systems defined above was used in combination with triethyl-aluminium (TEAL) as co-catalyst and dicyclopentadienyl-dimethoxy silane (donor D) as external donor.

The polymer powder of HECO B was compounded in a co-rotating twin-screw extruder Coperion ZSK 57 at 220°C with 0.15 wt.-% antioxidant (Irganox B215FF from BASF AG, Germany; this is a 1:2-mixture of Pentaerythrityl-tetrakis(3-(3',5'-di-tert. butyl-4-hydroxyphenyl)-propionate, CAS-no. 6683-19-8, and Tris (2,4-di-t-butylphenyl) phosphite,

CAS-no. 31570-04-4); 0.05 wt.-% of of Ca-stearate (CAS-no. 1592-23-0, commercially available from Faci, Italy).

The polymerization conditions of HECO B are shown below in Table 2.

**Table 1: preparation of HECO A-1 to A-6**

| | | HECO A-1 | HECO A-2 | HECO A-3 | HECO A-4 | HECO A-5 | HECO A-6 |
|---|---|---|---|---|---|---|---|
| Catalyst | | ZN1 | | | | | |
| Donor | | D | D | D | D | D | D |
| **Prepoly** | | | | | | | |
| Co/ED | mol/mol | 41.5 | 40.6 | 40.6 | 40.6 | 40.7 | 41.2 |
| Co/Ti | mol/mol | 361 | 347 | 327 | 340 | 312 | 604 |
| Temperature | °C | 20 | 20 | 20 | 20 | 20 | 20 |
| Pressure | kPa | 5472 | 5470 | 5476 | 5475 | 5468 | 5474 |
| **Loop** | | | | | | | |
| Temperature | °C | 75 | 75 | 75 | 75 | 75 | 75 |
| Pressure | kPa | 5457 | 5453 | 5459 | 5455 | 5456 | 5469 |
| Split | wt.-% | 44 | 42 | 45 | 40 | 47 | 39 |
| H2/C3 | mol/kmol | 35.9 | 34.5 | 36.2 | 35.8 | 35.9 | 31.7 |
| $MFR_2$ | g/10min | 522 | 487 | 570 | 533 | 582 | 561 |
| **GPR1** | | | | | | | |
| Temperature | °C | 80 | 80 | 80 | 80 | 80 | 80 |
| Pressure | kPa | 2199 | 2198 | 2200 | 2197 | 2198 | 2501 |
| Split | wt.-% | 33 | 30 | 31 | 31 | 30 | 29 |
| H2/C3 | mol/kmol | 271 | 267 | 273 | 271 | 285 | 269 |
| $MFR_2$ | g/10min | 444 | 404 | 441 | 426 | 531 | 522 |
| XCS | wt.-% | 2.4 | 2.6 | 2.7 | 2.5 | 2.4 | 2.5 |
| **GPR2** | | | | | | | |
| Temperature | °C | 75 | 75 | 75 | 75 | 75 | 75 |
| Pressure | kPa | 1899 | 1899 | 1900 | 1900 | 1900 | 1900 |
| C2/C3 | mol/kmol | 2062 | 914 | 1952 | 280 | 414 | 446 |
| H2/C3 | mol/kmol | 606 | 113 | 147 | 19 | 123 | 21 |
| H2/C2 | mol/kmol | 295 | 124 | 75 | 64 | 298 | 47 |
| Split | wt.-% | 23 | 28 | 24 | 29 | 23 | 32 |
| C2 | wt.-% | 25.7 | 9.8 | 23.9 | 8.4 | 7.6 | 11.6 |
| $MFR_2$ | g/10min | 105 | 94 | 62 | 54 | 162 | 76 |
| XCS | wt.-% | 20.2 | 26.3 | 20.5 | 24.1 | 20.3 | 28.9 |

**Table 2: Preparation and properties of HECO B**

| | | HECO B |
|---|---|---|
| Catalyst | | ZN2 |
| Donor | | D |

(continued)

| Prepoly | | |
|---|---|---|
| Co/ED | mol/mol | 6.0 |
| Co/Ti | mol/mol | 200 |
| Temperature | °C | 30 |
| **Loop** | | |
| Temperature | °C | 85 |
| Pressure | kPa | 5500 |
| Split | wt.-% | 35 |
| H2/C3 | mol/kmol | 65.0 |
| MFR$_2$ | g/10min | 140 |
| **GPR1** | | |
| Temperature | °C | 85 |
| Pressure | kPa | 2200 |
| Split | wt.-% | 40 |
| H2/C3 | mol/kmol | 21.2 |
| MFR$_2$ | g/10min | 55 |
| XCS | wt.-% | 1.9 |
| **GPR2** | | |
| Temperature | °C | 85 |
| Pressure | kPa | 2000 |
| C2/C3 | mol/kmol | 210 |
| H2/C2 | mol/kmol | 15.0 |
| Split | wt.-% | 15 |
| C2 | wt.-% | 4.5 |
| MFR$_2$ | g/10min | 20 |
| **GPR3** | | |
| Temperature | °C | 85 |
| Pressure | kPa | 1800 |
| C2/C3 | mol/kmol | 210.0 |
| H2/C2 | mol/kmol | 10.0 |
| Split | wt.-% | 10 |
| **Pellets** | | |
| MFR$_2$ | g/10min | 5.5 |
| XCS | wt.-% | 22.7 |
| IV(XCS) | dl/g | 5.5 |
| C2(XCS) | wt.-% | 22.6 |
| C2 total | wt.-% | 7.0 |

b) Properties of HECO A-1 to A-6

The properties of HECO A-1 to HECO A-6 are listed in Table 3

**Table 3: CRYSTEX QC analysis and other properties of HECO A-1 to A-6**

| | | HECO A-1 | HECO A-2 | HECO A-3 | HECO A-4 | HECO A-5 | HECO A-6 |
|---|---|---|---|---|---|---|---|
| $MFR_2$ | g/10min | 105 | 94 | 62 | 54 | 142 | 76 |
| SF (CRYSTEX) | wt.-% | 22.5 | 21.7 | 20.4 | 23.8 | 23.1 | 23.0 |
| IV(SF) | dl/g | 1.78 | 2.77 | 3.67 | 3.37 | 1.90 | 3.81 |
| C2(SF) | wt.-% | 55.6 | 42.9 | 55.3 | 29.3 | 32.1 | 34.6 |
| CF (CRYSTEX) | wt.-% | 77.5 | 78.3 | 79.6 | 76.2 | 76.9 | 77.0 |
| IV(CF) | dl/g | 1.15 | 1.11 | 1.39 | 1.11 | 1.00 | 1.11 |
| C2(CF) | wt.-% | 14.0 | 5.4 | 12.5 | 2.4 | 2.5 | 3.2 |
| IV | dl/g | 1.28 | 1.45 | 1.86 | 1.59 | 1.17 | 1.72 |
| IV(SF) / IV(CF) | | 1.55 | 2.50 | 2.64 | 3.04 | 1.90 | 3.43 |
| C2(SF) / C2(CF) | | 4.0 | 7.9 | 4.4 | 12.2 | 12.8 | 10.8 |
| C2 total | wt.-% | 23.4 | 13.7 | 20.6 | 8.4 | 9.1 | 10.8 |
| Tm | °C | 165 | 165 | 165 | 165 | 165 | 165 |
| Hm | J/g | 93.2 | 97.5 | 93.6 | 91.2 | 93.8 | 91.5 |
| Tc (PP) | °C | 130 | 130 | 130 | 130 | 130 | 130 |
| Tc (PE) | °C | 108.1 | 101.7 | 105.1 | - | - | - |
| Hm (tot) | J/g | 89.6 | 93.1 | 91.0 | 89.6 | 90.9 | 88.8 |
| Hm (PP) | J/g | 84.8 | 91.9 | 96.8 | 89.6 | 90.9 | 88.8 |
| Hm (PE) | J/g | 4.8 | 1.3 | 4.2 | - | - | - |
| Tensile modulus | MPa | 1275 | 1386 | 1255 | 1196 | 1374 | 1302 |
| Elongation at break | % | 2.8 | 2.9 | 2.7 | 8.2 | 3.9 | 3.1 |
| Elongation at yield | % | 2.7 | 2.7 | 2.6 | 4.1 | 2.8 | 3.5 |
| HDT | °C | 88 | 95 | 86 | 90 | 96 | 92 |
| Charpy NIS, 23°C | $kJ/m^2$ | 1.11 | 1.87 | 1.62 | 10.29 | 3.01 | 4.16 |
| Charpy NIS, -20°C | $kJ/m^2$ | 0.97 | 1.96 | 1.73 | 5.14 | 2.01 | 3.32 |
| Energy at max force, +23°C | J | 0.3 | 0.9 | 0.6 | 5.6 | 2.9 | 2.2 |
| Puncture energy, +23°C | J | 0.3 | 0.9 | 0.6 | 9.8 | 2.9 | 2.3 |
| Energy at max force, -20°C | J | 0.2 | 1.4 | 0.6 | 8.0 | 2.5 | 2.6 |
| Puncture energy, -20°C | J | 0.2 | 1.4 | 0.6 | 9.3 | 2.6 | 2.7 |
| CLTE, +23/80°C, MD | μm/m°C | 141.2 | 138.1 | 149.2 | 135.0 | 127.8 | 135.0 |
| CLTE, +23/80°C, TD | μm/m°C | 157.6 | 146.9 | 162.7 | 144.2 | 138.0 | 143.6 |
| CLTE, -30/80°C, MD | μm/m°C | 119.0 | 113.6 | 124.8 | 112.7 | 106.0 | 112.8 |
| CLTE, -30/80°C, TD | μm/m°C | 135.7 | 122.1 | 138.3 | 121.4 | 115.2 | 120.0 |

c) Preparation of the compositions IE1-IE3 and CE1-CE4

Further components:

Plastomer C was Queo 8201, being an ethylene-1-octene plastomer with a density of 883 kg/m$^3$ and a MFR$_2$ (2.16 kg, 190°C, ISO1133) of 1.1 g/10min, commercially available from Borealis AG.

Talc D was Luzenac HAR T84 with a d$_{50}$ of 2.0 μm and a d$_{95}$ of 10.0 μm (Sedigraph measurement), commercially available from IMERYS.

PP-Homo E was the commercial propylene homopolymer HL708FB with an MFR$_2$ (2.16 kg, 230°C, ISO1133) of 800 g/10min and a Tm (DSC, ISO 11357-3) of 158°C, commercially available from Borealis AG.

As additives tris (2,4-di-t-butylphenyl) phosphite (CAS-no. 31570-04-4), pentaerythrityl-tetrakis(3-(3',5'-di-tert. butyl-4-hydroxyphenyl)-propionate (CAS-no. 6683-19-8) and carbon black master batch MPP9D2337, commercially available from Colloids Ltd, were added.

The final compositions were compounded in a Coperion ZSK40 twin-screw extruder at 220°C using the polymers and talc together with antioxidants and carbon black masterbatch. The compositions of the examples are shown in Table 4.

**Table 4: Compositions of the examples**

|  | IE1 | IE2 | IE3 | CE1 | CE2 | CE3 | CE4 |
|---|---|---|---|---|---|---|---|
| HECO A-1, wt.-% | 56.2 | --- | --- | --- | --- | --- | 39.7 |
| HECO A-2, wt.-% | --- | 56.2 | --- | --- | --- | --- | --- |
| HECO A-3, wt.-% | --- | --- | 56.2 | --- | --- | --- | --- |
| HECO A-4, wt.-% | --- | --- | --- | 56.2 | --- | --- | --- |
| HECO A-5, wt.-% | --- | --- | --- | --- | 56.2 | --- | --- |
| HECO A-6, wt.-% | --- | --- | --- | --- | --- | 56.2 | --- |
| HECO B, wt.-% | 10.0 | 10.0 | 10.0 | 10.0 | 10.0 | 10.0 | 17.5 |
| Plastomer C, wt.-% | 16.0 | 16.0 | 16.0 | 16.0 | 16.0 | 16.0 | 12.5 |
| Talc D, wt.-% | 15.0 | 15.0 | 15.0 | 15.0 | 15.0 | 15.0 | 15.0 |
| PP-Homo E, wt.-% | --- | --- | --- | --- | --- | --- | 12.5 |
| Additives, wt.-% | 2.8 | 2.8 | 2.8 | 2.8 | 2.8 | 2.8 | 2.8 |

d) Properties of the compositions of examples IE1-IE3 and CE1-CE4

Table 5 shows the properties of the examples.

**Table 5: Properties of the examples**

|  | IE1 | IE2 | IE3 | CE1 | CE2 | CE3 | CE4 |
|---|---|---|---|---|---|---|---|
| MFR$_2$, g/10 min | 28.5 | 27.0 | 16.4 | 19.6 | 37.8 | 22.4 | 47.2 |
| C2 (Comp), wt.-% | 32.2 | 27.0 | 31.1 | 22.9 | 22.9 | 24.2 | 24.5 |
| IV (Comp), dl/g | 1.54 | 1.69 | 1.96 | 1.79 | 1.47 | 1.85 | 1.33 |
| CF (CRYSTEX), wt.-% | 67.5 | 63.5 | 68.9 | 65.4 | 67.3 | 66.3 | 73.4 |
| C2 (CF), wt.-% | 15.9 | 10.4 | 15.9 | 8.0 | 8.0 | 9.0 | 12.2 |
| IV (CF), dl/g | 1.35 | 1.30 | 1.53 | 1.28 | 1.21 | 1.26 | 1.18 |
| SF (CRYSTEX), wt.-% | 32.5 | 36.5 | 31.1 | 34.6 | 32.7 | 33.7 | 26.6 |
| C2 (SF), wt.-% | 67.5 | 65.3 | 67.2 | 51.4 | 55.3 | 55.9 | 62.3 |
| IV (SF), dl/g | 1.99 | 2.35 | 2.89 | 2.76 | 2.07 | 2.96 | 1.77 |
| IV (SF) / IV (CF) | 1.47 | 1.81 | 1.89 | 2.16 | 1.71 | 2.35 | 1.33 |

(continued)

| | IE1 | IE2 | IE3 | CE1 | CE2 | CE3 | CE4 |
|---|---|---|---|---|---|---|---|
| C2 (SF) / C2 (CF) | 4.2 | 6.3 | 4.2 | 6.4 | 6.9 | 6.2 | 5.1 |
| Tensile modulus, MPa | 1616 | 1828 | 1773 | 1572 | 1675 | 1731 | 1811 |
| Elongation at Yield, % | 7.3 | 4.1 | 4.4 | 5.4 | 5.4 | 3.8 | 4.4 |
| Elongation at Break, % | 122 | 19.1 | 16.5 | 189 | 40.1 | 28.2 | 12.8 |
| Charpy NIS, +23°C, kJ/m$^2$ | 29.2 | 17.1 | 12.8 | 52.6 | 33.2 | 34.3 | 8.1 |
| Charpy NIS, -20°C, kJ/m$^2$ | 5.8 | 6.2 | 6.0 | 7.2 | 5.5 | 7.1 | 3.7 |
| Charpy NIS, -30°C, kJ/m$^2$ | 3.9 | 4.4 | 3.9 | 4.3 | 3.7 | 5.1 | n.d. |
| Energy at max force, +23°C, J | 18.7 | 19.6 | 19.4 | 19.1 | 19.2 | 19.3 | 21.7 |
| Puncture energy, +23°C, J | 34.1 | 35.3 | 33.8 | 35.2 | 34.9 | 35.3 | 38.7 |
| Energy at max force, -20°C, J | 28.8 | 24.8 | 18.3 | 29.7 | 23.8 | 27.5 | 9.7 |
| Puncture energy, -20°C, J | 41.1 | 26.6 | 19.8 | 38.1 | 27.4 | 29.7 | 10.1 |
| Energy at max force, -30°C, J | 27.1 | 18.5 | 17.9 | 27.8 | 19.4 | 22.8 | 2.8 |
| Puncture energy, -30°C, J | 29.6 | 20.2 | 19.7 | 30.0 | 21.4 | 24.5 | 2.9 |
| CLTE, +23/80°C, μm/m°C, MD | 66.6 | 76.3 | 79.8 | 82.2 | 75.9 | 81.0 | 75.7 |
| CLTE, +23/80°C, μm/m°C, TD | 121.2 | 129.1 | 132.2 | 135.7 | 131.5 | 135.7 | 128.8 |
| CLTE, -30/80°C, μm/m°C, MD | 52.7 | 59.0 | 61.8 | 64.6 | 60.5 | 63.0 | 60.8 |
| CLTE, -30/80°C, μm/m°C, TD | 99.5 | 104.4 | 105.3 | 109.1 | 105.7 | 109.4 | 104.0 |
| Isotropic Area Shrinkage, % | 0.49 | 0.70 | 0.68 | 0.77 | 0.75 | 0.81 | 0.84 |
| Shrinkage in flow, % | 0.40 | 0.59 | 0.56 | 0.64 | 0.62 | 0.68 | 0.71 |
| Shrinkage cross flow, % | 0.49 | 0.73 | 0.72 | 0.81 | 0.81 | 0.86 | 0.88 |
| Delaminated painted area, mm$^2$ | 9.69 | 0.11 | 0 | 2.34 | 7.19 | 0.03 | 4.72 |
| n.d. not determined | | | | | | | |

Examples IE1-IE3 and CE1-CE3 have the same general composition whereas example CE4 has a composition with a lower amount of HECO A-1 and instead includes propylene homopolymer PP Homo E.

In comparison to example CE4, inventive example IE1, which also includes HECO A-1, shows improved impact properties, puncture energy at low temperatures, reduced shrinkage and reduced initial coefficient of linear thermal expansion (CLTE), whereas the tensile properties are maintained at acceptable levels.

Inventive examples IE1-IE3, which include HECOs A-1 to A-3 according to the invention, show reduced shrinkage and reduced initial coefficient of linear thermal expansion (CLTE), whereas the tensile properties, impact properties and puncture energy are comparable, when compared to comparative example CE1-CE3, which include HECOs A-4 to A-6, which show an ethylene content of soluble fraction C2(SF) below the claimed range.

## Claims

1. A composition suitable for automotive applications

   obtainable by blending at least components (A), (B), (C) and (D)

   (A) more than 50 to 75 wt.-%, preferably 51 to 73 wt.-%, more preferably 54 to 70 wt.-% of a first heterophasic propylene copolymer;
   (B) 5 to 15 wt.-%, preferably 7 to 13 wt.-%, more preferably 8 to 12 wt.-% of a second heterophasic propylene copolymer;

(C) 10 to 20 wt.-%, preferably 12 to 19 wt.-%, more preferably 14 to 18 wt.-% of an ethylene-based plastomer and

(D) 5 to 20 wt.-%, preferably 7 to 18 wt.-%, more preferably 8 to 17 wt.-% of an inorganic filler;

whereby all percentages refer to the total composition, and whereby the first heterophasic propylene copolymer (A) comprises a matrix phase and an elastomer phase dispersed therein and has

- a melt flow rate $MFR_2$ (230°C, 2.16 kg, ISO 1133) of 40 to 150 g/10min, preferably 45 to 140 g/10min, more preferably 50 to 130 g/10min;
- a soluble fraction (SF) content determined according to CRYSTEX QC analysis in the range from 15.0 to 27.5 wt.-%, preferably from 16.5 to 25.0 wt.-%, more preferably from 17.5 to 24.0 wt.-%;
- an ethylene content of said soluble fraction C2(SF), as determined by FT-IR spectroscopy calibrated by quantitative $^{13}$C-NMR spectroscopy, in the range from 37.0 to 65.0 wt.-%, preferably from 39.0 to 60.0 wt.-%, more preferably from 40.0 to 58.0 wt.-%; and
- an intrinsic viscosity of said soluble fraction IV(SF), as measured in decalin according to DIN ISO 1628/1 at 135°C, of 1.2 to 4.5 dl/g, preferably of 1.4 to 4.0 dl/g, more preferably of 1.5 to 3.9 dl/g;

the second heterophasic propylene copolymer (B) comprises a matrix phase and an elastomer phase dispersed therein and has

- a melt flow rate $MFR_2$ (230°C, 2.16 kg, ISO 1133) of 3.0 to 30 g/10min, preferably 4.0 to 25 g/10min, more preferably 5.0 to 20 g/10min;
- a soluble fraction (SF) content determined according to CRYSTEX QC analysis in the range of from 18.0 to 45.0 wt.-%, preferably from 20.0 to 40.0 wt.-%; and
- an intrinsic viscosity of said soluble fraction IV(SF), as measured in decalin according to DIN ISO 1628/1 at 135°C, of 2.5 to 8.5 dl/g, preferably of 3.0 to 8.0 dl/g, more preferably of 3.5 to 7.5 dl/g;

the ethylene-based plastomer (C) being a copolymer of ethylene with comonomer units selected from alpha-olefins having from 3 to 12 carbon atoms, preferably from alpha-olefins having from 4 to 10 carbon atoms, most preferably from 1-butene or 1-octene, has

- a melt flow rate $MFR_2$ (190°C, 2.16 kg, ISO 1133) of 0.5 to 25.0 g/10min, preferably 0.8 to 20.0 g/10min; and
- a density of 850 to 900 kg/m$^3$, preferably from 860 to 895 kg/m$^3$, more preferably from 865 to 895 kg/m$^2$, still more preferably from 870 to 890 kg/m$^3$; and

the composition has

- a melt flow rate $MFR_2$ (230°C, 2.16 kg, ISO 1133) of 12 to 50 g/10min, preferably 13 to 45 g/10min, more preferably 14 to 40 g/10min.

2. The composition according to claim 1, obtainable by blending components (A), (B), (C), (D) and optionally component (E)

(E) 0 to less than 5 wt.-%, preferably 0 to 4 wt.-%, more preferably 0 to 3 wt.-% of a propylene homopolymer; whereby all percentages refer to the total composition, and whereby

the propylene homopolymer (E) has

- a melt flow rate $MFR_2$ (230°C, 2.16 kg, ISO 1133) of not more than 100 g/10min, preferably 1 to 95 g/10 min, more preferably 5 to 80 g/10 min.

3. The composition according to any one of the preceding claims, wherein the inorganic filler (D) is talc having

- a median particle size $d_{50}$ before compounding of 1.0 to 20.0 micrometers, preferably 1.5 to 15.0 micrometers; and/or
- a top-cut particle size $d_{95}$ before compounding of 5.0 to 50.0 micrometers, preferably 8.0 to 40.0 micrometers.

4. The composition according to any one of the preceding claims, wherein the first heterophasic propylene copolymer (A) has one or more, preferably all of the following properties:

- a crystalline fraction (CF) content determined according to CRYSTEX QC analysis in the range from 72.5 to 85.0 wt.-%, preferably 75.0 to 83.5 wt.-%, more preferably 76.0 to 82.5 wt.-%; and/or

- an ethylene content in said crystalline fraction C2(CF), as determined by FT-IR spectroscopy calibrated by quantitative $^{13}$C-NMR spectroscopy, of 4.5 to 17.5 wt.-%, preferably of 4.7 to 17.0 wt.-%, more preferably of 5.0 to 16.0 wt.-%; and/or

- an intrinsic viscosity of said crystalline fraction IV(CF), as measured in decalin according to DIN ISO 1628/1 at 135°C of 0.7 to 1.7 dl/g, preferably of 0.8 to 1.6 dl/g, more preferably of 0.9 to 1.5 dl/g; and/or

- a ratio of the intrinsic viscosities of the soluble fraction and crystalline fraction (IV(SF)/IV(CF)) of more than 1.0, preferably of 1.3 to 3.0, more preferably of 1.4 to 2.8; and/or

- a ratio of the ethylene contents of the soluble fraction and crystalline fraction (C2(SF)/C2(CF)) of 2.5 to 12.0, preferably in the range of from 3.0 to 10.0, more preferably in the range of from 3.5 to 8.5; and/or

- a total content of units derived from ethylene (C2) of 12.0 to 32.5 wt.-%, preferably of 12.5 to 30.0 wt.-%, more preferably of 13.0 to 27.5 wt.-%, as determined by FT-IR spectroscopy calibrated by quantitative $^{13}$C-NMR spectroscopy; and/or

- a melt temperature Tm of from 155 to 175°C, preferably from 157 to 172°C, more preferably from 160 to 170°C, measured by differential scanning calorimetry (DSC) according to ISO 11357 / part 3 /method C2; and/or

- a first crystallization temperature Tc1 of from 120 to 140°C, preferably from 122 to 137°C, more preferably from 125 to 135°C, measured by differential scanning calorimetry (DSC) according to ISO 11357 / part 3 /method C2; and/or

- a second crystallization temperature Tc2 of from 95 to 115°C, preferably from 97 to 112°C, more preferably from 100 to 110°C, measured by differential scanning calorimetry (DSC) according to ISO 11357 / part 3 /method C2; and/or

- a tensile modulus of from 1100 to 1500 MPa, preferably from 1150 to 1450 MPa, more preferably from 1200 to 1400 MPa, measured according to ISO 527-2 (cross head speed = 1 mm/min; test speed = 50 mm/min at 23 °C) using injection moulded specimens 1B prepared as described in EN ISO 1873-2 (dog bone shape, 4 mm thickness); and/or

- a Charpy Notched Impact Strength at 23°C (CNIS at 23°C) of from 0.7 to 4.0 $kJ/m^2$, preferably from 0.9 to 2.5 $kJ/m^2$, measured according to ISO 179-1 eA at +23 °C on injection moulded specimens of $80 \times 10 \times 4$ $mm^3$ prepared according to EN ISO 1873-2; and/or

- a Charpy Notched Impact Strength at -20°C (CNIS at -20°C) of from 0.5 to 4.0 $kJ/m^2$, preferably from 0.7 to 2.5 $kJ/m^2$, measured according to ISO 179-1 eA at -20 °C on injection moulded specimens of $80 \times 10 \times 4$ $mm^3$ prepared according to EN ISO 1873-2; and/or

- a coefficient of linear thermal expansion at a temperature range from 23 to +80°C at a heating rate of 1 °C/min in machine direction (CLTE 23-80°C, MD) of from 130 to 170 $\mu$m/m°C, preferably from 135 to 160 $\mu$m/m°C, determined in accordance with ISO 11359-2:1999; and/or

- a coefficient of linear thermal expansion at a temperature range from 23 to +80°C at a heating rate of 1 °C/min in transverse direction (CLTE 23-80°C, TD) of from 135 to 180 $\mu$m/m°C, preferably from 140 to 170 ($\mu$m/m°C, determined in accordance with ISO 11359-2:1999; and/or

- a coefficient of linear thermal expansion at a temperature range from -30 to +80°C at a heating rate of 1 °C/min in machine direction (CLTE -30-80°C, MD) of from 105 to 140 $\mu$m/m°C, preferably from 110 to 130 ($\mu$m/m°C, determined in accordance with ISO 11359-2:1999; and/or

- a coefficient of linear thermal expansion at a temperature range from -30 to +80°C at a heating rate of 1 °C/min in transverse direction (CLTE -30-80°C, TD) of from 115 to 155 $\mu$m/m°C, preferably from 120 to 145 $\mu$m/m°C, determined in accordance with ISO 11359-2:1999; and/or

- a puncture energy in the instrumented puncture test at 23°C (IPT 23°C) of from 0.1 to 2.5 J, preferably from 0.2 to 1.5 J, determined on $60 \times 60 \times 3$ $mm^3$ injection-moulded plaques at 23°C according to ISO 6603-2:2000; and/or

- a puncture energy in the instrumented puncture test at -20°C (IPT -20°C) of from 0.05 to 3.0 J, preferably from 0.1 to 2.0 J, determined on $60 \times 60 \times 3$ $mm^3$ injection-moulded plaques at -30°C according to ISO 6603-2:2000; and/or

- a heat deflection temperature HDT B of from 80 to 105°C, preferably from 83 to 100°C, determined on injection moulded test specimens of $80 \times 10 \times 4$ $mm^3$ prepared according to ISO 1873-2.

5. The composition according to any one of the preceding claims having

- a crystalline fraction (CF) content determined according to CRYSTEX QC analysis in the range from 50.0 to 75.0 wt.-%, preferably 55.0 to 73.0 wt.-%, more preferably 60.0 to 72.0 wt.-%; and

- a soluble fraction (SF) content determined according to CRYSTEX QC analysis in the range from 25.0 to 50.0 wt.-%, preferably 27.0 to 45.0 wt.-%, more preferably 28.0 to 40.0 wt.-%.

6. The composition according to claim 5, wherein

- said crystalline fraction (CF) has an ethylene content (C2(CF)), as determined by FT-IR spectroscopy calibrated by quantitative $^{13}$C-NMR spectroscopy, of from 8.0 to 20.0 wt.-%, preferably 8.5 to 19.0 wt.-%, more preferably 9.0 to 18.0 wt.-%; and/or
- said crystalline fraction (CF) has an intrinsic viscosity (IV(CF)), as measured in decalin according to DIN ISO 1628/1 at 135°C, of 0.9 to 2.5 dl/g, preferably 1.0 to 2.3 dl/g, more preferably 1.1 to 2.2 dl/g; and/or
- said soluble fraction (SF) has an ethylene content (C2(SF)), as determined by FT-IR spectroscopy calibrated by quantitative $^{13}$C-NMR spectroscopy, in the range from 60.0 to 75.0 wt.-%, preferably 62.0 to 72.5 wt.-%, more preferably 64.0 to 70.0 wt.-%; and/or
- said soluble fraction (SF) has an intrinsic viscosity (IV(SF)), as measured in decalin according to DIN ISO 1628/1 at 135°C, of from 1.7 to 3.5 dl/g, preferably from 1.8 to 3.3 dl/g, more preferably 1.9 to 3.2 dl/g; and/or
- the total content of units derived from ethylene (C2) of the composition, as determined by FT-IR spectroscopy calibrated by quantitative $^{13}$C-NMR spectroscopy, is from 20.0 to 40.0 wt.-%, preferably from 22.5 to 37.5 wt.-%, more preferably from 25.0 to 35.0 wt.-%; and/or
- an intrinsic viscosity IV of from 1.40 to 2.50 dl/g, preferably from 1.45 to 2.30 dl/g, more preferably from 1.50 to 2.10 dl/g; and/or
- a ratio of the intrinsic viscosities of the soluble fraction and crystalline fraction (IV(SF)/IV(CF)) of more than 1.0, preferably of 1.1 to 2.5, more preferably of 1.2 to 2.2; and/or
- a ratio of the ethylene contents of the soluble fraction and crystalline fraction (C2(SF)/C2(CF)) of 2.5 to 7.5, preferably in the range of from 3.0 to 7.0, more preferably in the range of from 3.5 to 6.5.

7. The composition according to any one of the preceding claims having

- a tensile modulus of from 1500 MPa to 2500 MPa, preferably from 1600 MPa to 2200 MPa; and/or
- a tensile elongation at break of more than 10.0%, preferably from 13.0 to 200.0%, all measured according to ISO 527-2 (cross head speed = 1 mm/min; test speed 50 mm/min at 23 °C) using injection moulded specimens 1B prepared as described in EN ISO 1873-2 (dog bone shape, 4 mm thickness).

8. The composition according to any one of the preceding claims having a Charpy Notched Impact Strength at 23°C of from 10.0 to 75.0 kJ/m$^2$, preferably from 11.5 to 65.0 kJ/m$^2$, and/or a Charpy Notched Impact Strength at -20°C of from 4.0 to 15.0 kJ/m$^2$, preferably from 5.0 to 13.0 kJ/m$^2$, and/or a Charpy Notched Impact Strength at -30°C of from 2.5 to 10.0 kJ/m$^2$, preferably from 3.0 to 7.5 kJ/m$^2$, all measured according to ISO 179-1 eA at +23 °C, at -20°C and at -30°C on injection moulded specimens of $80 \times 10 \times 4$ mm$^3$ prepared according to EN ISO 1873-2.

9. The composition according to any one of the preceding claims having a puncture energy of from 28.0 to 65.0 J, preferably from 30.0 to 60.0 J and/or an energy at maximum force of from 15.0 to 45.0 J, preferably from 17.5 to 35.0 J, when determined in the instrumented puncture test according to ISO 6603-2 at 23 °C, and/or puncture energy of from 10.0 to 55.0 J, preferably from 12.0 to 50.0 J and/or an energy at maximum force of from 15.0 to 40.0 J, preferably from 17.5 to 35.0 J, when determined in the instrumented puncture test according to ISO 6603-2 at -20°C, and/or puncture energy of from 10.0 to 55.0 J, preferably from 12.0 to 50.0 J and/or an energy at maximum force of from 15.0 to 40.0 J, preferably from 16.5 to 35.0 J, when determined in the instrumented puncture test according to ISO 6603-2 at -30°C.

10. An article, preferably an injection moulded article, more preferably an injection moulded automotive article comprising the composition according to any one of the preceding claims.

11. The article according to claim 10 having paint adhesion assessed as the failed or delaminated coated area in mm$^2$ of below 20 mm$^2$, preferably from 0 to 15 mm$^2$, more preferably from 0 to 12 mm$^2$, determined as described in the experimental section.

12. The article according to any one of claims 10 to 11 having an isotropic area shrinkage of from 0.20 to 0.80%, preferably from 0.25 to 0.75%, determined as described in the experimental section.

13. The article according to any one of claims 10 to 11 having a shrinkage in flow of from 0.20 to 0.90%, preferably from 0.25 to 0.80% and/or a shrinkage cross flow of from 0.20 to 0.90%, preferably from 0.25 to 0.80%, determined as described in the experimental section.

14. The article according to any one of claims 10 to 13 having a coefficient of linear thermal expansion at a temperature range from +23 to +80°C at a heating rate of 1 °C/min in machine direction (CLTE 23-80°C, MD) of below 90 $\mu$m/m°C, preferably from 60 to 85 $\mu$m/m°C and/or a coefficient of linear thermal expansion at a temperature range from +23 to +80°C at a heating rate of 1 °C/min in transverse direction (CLTE 23-80°C, TD) of below 140 ($\mu$m/m°C, preferably from 110 to 135 ($\mu$m/m°C, and/or a coefficient of linear thermal expansion at a temperature range from -30 to +80°C at a heating rate of 1 °C/min in machine direction (CLTE -30-80°C, MD) of below 75 $\mu$m/m°C, preferably from 30 to 70 $\mu$m/m°C, and/or a coefficient of linear thermal expansion at a temperature range from -30 to +80°C at a heating rate of 1 °C/min in transverse direction (CLTE -30-80°C, TD) of below 125 $\mu$m/m°C, preferably from 70 to 110 ($\mu$m/m°C, all determined in accordance with ISO 11359-2:1999.

15. Use of the composition according to any one of claims 1 to 9 for injection moulding of articles, preferably automotive articles.

Europäisches
Patentamt

European
Patent Office

Office européen
des brevets

# EUROPEAN SEARCH REPORT

Application Number

**EP 22 20 9172**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 954 737 A1 (BOREALIS AG [AT]) 16 February 2022 (2022-02-16) * paragraphs [0001] - [0004]; claims; examples IE2-IE4; tables 2,3 * ----- | 1-15 | INV. C08L23/12 |
| A | WO 2021/078857 A1 (BOREALIS AG [AT]) 29 April 2021 (2021-04-29) * page 1, line 4 - line 25 * * page 4, line 22 - line 32; claims; example IE1; tables 3,4,7 * ----- | 1-15 | |

TECHNICAL FIELDS
SEARCHED      (IPC)

C08L

The present search report has been drawn up for all claims

| Place of search | Date of completion of the search | Examiner |
|---|---|---|
| Munich | 12 April 2023 | Iraegui Retolaza, E |

EPO FORM 1503 03.82 (P04C01)

## ANNEX TO THE EUROPEAN SEARCH REPORT
## ON EUROPEAN PATENT APPLICATION NO.

EP 22 20 9172

12-04-2023

| Patent document cited in search report | | Publication date | Patent family member(s) | | Publication date |
|---|---|---|---|---|---|
| EP 3954737 | A1 | 16-02-2022 | BR 112023002387 | A2 | 21-03-2023 |
| | | | EP 3954737 | A1 | 16-02-2022 |
| | | | WO 2022034208 | A1 | 17-02-2022 |
| WO 2021078857 | A1 | 29-04-2021 | NONE | | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2005014715 A1
- WO 2017148970 A1
- EP 0887379 A
- WO 9212182 A
- WO 2004000899 A
- WO 2004111095 A
- WO 9924478 A
- WO 9924479 A
- WO 0068315 A
- WO 2012007430 A
- EP 2610271 A
- EP 261027 A
- EP 2610272 A
- WO 2014023603 A
- EP 591224 A
- EP 2415790 A
- EP 2610270 A
- EP 2610273 A
- EP 2960257 A
- EP 2960256 A
- WO 2016066446 A1
- EP 2960256 B1
- EP 2960279 B1
- EP 491566 A
- EP 586390 A

**Non-patent literature cited in the description**

- **LJILJANA JEREMIC ; ANDREAS ALBRECHT ; MARTINA SANDHOLZER ; MARKUS GAHLEITNER.** Rapid characterization of high-impact ethylene-propylene copolymer composition by crystallization extraction separation: comparability to standard separation methods. *International Journal of Polymer Analysis and Characterization,* 2020, vol. 25 (8), 581-596
- **SINGH, G. ; KOTHARI, A. ; GUPTA, V.** *Polymer Testing,* 2009, vol. 28 (5), 475
- **ZHOU, Z. et al.** *J. Mag. Reson.,* 2007, vol. 187, 225
- **BUSICO, V. et al.** *Macromol. Rapid Commun.,* 2007, vol. 28, 1128
- **CHENG, H. N.** *Macromolecules,* 1984, vol. 17, 1950
- **WANG, W-J. ; ZHU, S.** *Macromolecules,* 2000, vol. 33, 1157